# EUROPEAN PATENT APPLICATION

(11) **EP 4 811 615 A1**
(43) Date of publication of application: **23.09.2026**
(21) Application number: 24891292.5
(22) Date of filing: 06.11.2024
(51) Int. Cl.: H02K 3/18, H02K 3/28, H02P 25/22, H02P 27/06

(54) **ROTATING ELECTRICAL MACHINE**

(30) Priority: 16.11.2023 JP 2023194966
(71) Applicant: DENSO CORPORATION, Kariya-city, Aichi 448-8661 (JP)
(72) Inventor: KATO, Hidenori, Kariya-city, Aichi 448-8661 (JP)
(74) Representative: Kuhnen & Wacker Patent- und Rechtsanwaltsbüro PartG mbB
(86) International application number: PCT/JP2024/039395
(87) International publication number: WO 2025/105253

(57) **Abstract**

A three-phase current supplied from a first inverter (51) and a third inverter (53), and a three-phase current supplied from a second inverter (52) and a fourth inverter (54) each have a predetermined current phase difference. First coil bodies (Ua, Va, Wa) of each phase are formed by winding a first stator winding (321) or a third stator winding (323) around first teeth. Second coil bodies (Ub, Vb, Wb) of each phase are formed by winding a second stator winding (322) or a fourth stator winding (324) around second teeth. Third coil bodies (Uc, Vc, Wc) of each phase are formed by winding either the first stator winding (321) or the third stator winding (323) of any one phase of the three phases, and either the second stator winding (322) or the fourth stator winding (324) of any one phase of the three phases, around the third teeth.

## Description

### CROSS REFERENCE TO RELATED APPLICATION

This application is based on and incorporates herein by reference Japanese Patent Application No. 2023-194966 filed on November 16, 2023.

### TECHNICAL FIELD

The present disclosure relates to a rotary electric machine.

### BACKGROUND

Conventionally, a rotary electric machine equipped with two sets of stator windings, each of which is supplied with three-phase current by two inverters, is known. In this rotary electric machine, a technique is used in which energization is performed with a phase difference between the two inverters, thereby reducing sixth and twelfth order electrical torque ripples. For example, the rotary electric machine disclosed in Patent Literature 1 has the following configuration. Each phase of the first stator winding is wound around first teeth to form coil bodies Ua, Va, and Wa. Each phase of the second stator winding is wound around second teeth to form coil bodies Ub, Vb, and Wb. Furthermore, one phase of the first stator winding and one phase of the second stator winding are wound around third teeth to form coil bodies Uc, Vc, and Wc. In this rotary electric machine, the two inverters supply the first stator winding and the second stator winding with a phase difference of 20 degrees or 40 degrees in electrical angle. Furthermore, in the coil bodies Uc, Vc, and Wc, a magnetomotive force with a total phase difference of 80 degrees or 40 degrees is synthesized, so that the sixth and twelfth order harmonic components can be canceled.

Patent Literature 2 discloses a motor drive system in which a rotary electric machine (motor) having a configuration of Patent Literature 1 is driven by two inverters.

### PRIOR ART LITERATURE

### PATENT LITERATURE

Patent Literature 1: JP 7103299 B
Patent Literature 2: JP 7226809 B

### SUMMARY OF THE INVENTION

In this specification, a series of units comprising an inverter and a stator winding supplied with three-phase electric current from the inverter is referred to as a "system." Patent Literatures 1 and 2 disclose a "two-system" rotary electric machine and motor drive system, in which three-phase currents are respectively supplied from two inverters to two corresponding sets of stator windings. In a two-system redundant system, if the inverter or the stator winding of one system malfunctions, the rotary electric machine (motor) can continue to operate using the other system. Therefore, it is applied to systems that require high reliability, such as electric power steering apparatus for vehicles.

However, in the future, further enhancement of system redundancy will be required to achieve even greater safety and reliability. For example, when implementing a "four-system" configuration, simply increasing the number of inverters from two to four can be easily achieved. However, with regard to the configuration of the stator windings of the rotary electric machine, the conventional technology disclosed in Patent Literature 1 cannot be directly applied.

The object of the present disclosure is to provide a rotary electric machine, to which three-phase current is supplied from an inverter, which reduces 6th and 12th-order electrical torque ripple and also enhances redundancy.

A rotary electric machine according to the present disclosure comprises: a rotor having magnetic poles with alternating polarities in a circumferential direction, the rotor rotating integrally with a rotation shaft; and a stator including a stator core provided with teeth at predetermined intervals in the circumferential direction, and three-phase stator windings wound around the teeth.

The stator windings include: a first stator winding to which a three-phase current is supplied from a first inverter; a second stator winding to which a three-phase current is supplied from a second inverter; a third stator winding to which a three-phase current is supplied from a third inverter; and a fourth stator winding to which a three-phase current is supplied from a fourth inverter.

The three-phase current supplied from the first inverter and the three-phase current supplied from the third inverter are energized with the same current amplitude and the same phase. The three-phase current supplied from the second inverter and the three-phase current supplied from the fourth inverter are energized with the same current amplitude and the same phase. The three-phase currents supplied from the first and third inverters and the three-phase currents supplied from the second and fourth inverters have a predetermined current phase difference therebetween. The predetermined current phase difference is set, for example, within a range of 15 to 25 degrees or within a range of 35 to 45 degrees.

The rotary electric machine includes: a first coil body of the U-phase, a first coil body of the V-phase, a first coil body of the W-phase, a second coil body of the U-phase, a second coil body of the V-phase, a second coil body of the W-phase, a third coil body of the U-phase, a third coil body of the V-phase, and a third coil body of the W-phase.

The first coil body of the U-phase is formed by winding the first stator winding or the third stator winding of the U-phase around a first tooth. The first coil body of the V-phase is formed by winding the first stator winding or the third stator winding of the V-phase around the first tooth. The first coil body of the W-phase is formed by winding the first stator winding or the third stator winding of the W-phase around the first tooth.

The second coil body of the U-phase is formed by winding the second stator winding or the fourth stator winding of the U-phase around a second tooth. The second coil body of the V-phase is formed by winding the second stator winding or the fourth stator winding of the V-phase around the second tooth. The second coil body of the W-phase is formed by winding the second stator winding or the fourth stator winding of the W-phase around the second tooth.

The third coil body of the U-phase is formed by winding the first stator winding or the third stator winding of any one phase and the second stator winding or the fourth stator winding of any one phase around a third tooth. The third coil body of the V-phase is formed by winding the first stator winding or the third stator winding of any one phase and the second stator winding or the fourth stator winding of any one phase around the third tooth. The third coil body of the W-phase is formed by winding the first stator winding or the third stator winding of any one phase and the second stator winding or the fourth stator winding of any one phase around the third tooth.

The rotary electric machine is configured such that either of the following First Condition G1 or Second Condition G2 is satisfied by setting a first combined phase difference pd1 or a second combined phase difference pd2 described below. The "predetermined phase range including 20 electrical degrees" includes, for example, 20 and 40 electrical degrees.

The First Condition G1 is a condition in which each phase difference between the magnetomotive force of each third coil body and the magnetomotive force of each first coil body, and each phase difference between the magnetomotive force of each second coil body and the magnetomotive force of each third coil body, is set within a predetermined phase range including 20 electrical degrees.

The Second Condition G2 is a condition in which each phase difference between the magnetomotive force of each second coil body (Ub, Vb, Wb) and the magnetomotive force of each first coil body, and each phase difference between the magnetomotive force of each third coil body and the magnetomotive force of each second coil body, is set within a predetermined phase range including 20 electrical degrees.

The first combined phase difference pd1 is a combined phase difference between a magnetomotive force generated by a partial winding of the first stator winding or the third stator winding wound around the third tooth and a magnetomotive force generated by a partial winding of the second stator winding or the fourth stator winding wound around the third tooth.

The second combined phase difference pd2 is a combined phase difference between a current flowing through a partial winding of the first stator winding or the third stator winding wound around the third tooth and a current flowing through a partial winding of the second stator winding or the fourth stator winding wound around the third tooth.

In the present disclosure, a four-system rotary electric machine is provided in which three-phase currents are supplied from four inverters to four corresponding sets of stator windings. For this rotary electric machine, phase-difference energization with a predetermined current phase difference is performed between a group consisting of the first and third systems and a group consisting of the second and fourth systems. In the third coil body, by setting the above-mentioned first combined phase difference pd1 or second combined phase difference pd2 with respect to the magnetomotive force or current, the 6th and 12th electrical harmonic components are canceled. Therefore, torque ripple can be reduced and redundancy can be enhanced.

### BRIEF DESCRIPTION OF DRAWINGS

The above and other objectives, features and advantages of the present disclosure will become more apparent from the following detailed description with reference to the accompanying drawings.
FIG. 1 is an overall configuration diagram of a four-system motor drive system.
FIG. 2 is a schematic axial cross-sectional view of a motor.
FIG. 3 is a schematic cross-sectional view taken along line III-III in FIG. 2, showing an example arrangement of stator winding lead wires.
FIG. 4 is a diagram showing an example configuration of a four systems (first to fourth) of stator windings.
FIG. 5 is a radial cross-sectional view showing a circumferential configuration of a stator and a rotor.
FIG. 6 is a diagram illustrating phases of three-phase currents supplied to first coil bodies Ua, Va, Wa and second coil bodies Ub, Vb, Wb by 20° phase difference energization and 40° phase difference energization.
FIG. 7 is a diagram illustrating an electric current and magnetomotive force summed in third coil bodies Uc, Vc, Wc during 20° phase difference energization.
FIG. 8 is a diagram illustrating the current and magnetomotive force summed in the third coil bodies Uc, Vc, and Wc during 40° phase difference energization.
FIG. 9 is a table showing an example arrangement of partial windings of four-system stator windings in a 14P18S motor.
FIG. 10 is a radial cross-sectional view of the 14P18S motor according to a first embodiment.
FIG. 11 is a radial cross-sectional view of the 14P18S motor according to a second embodiment.
FIG. 12 is a radial cross-sectional view of the 14P18S motor according to a third embodiment.
FIG. 13 is a radial cross-sectional view of the 14P18S motor according to a fourth embodiment.
FIG. 14 is a table showing an example arrangement of partial windings of four-system stator windings in a 22P18S motor.
FIG. 15 is a radial cross-sectional view of a 22P18S motor according to a fifth embodiment.
FIG. 16 is a table showing an example arrangement of partial windings of four-system stator windings in a 16P18S motor.
FIG. 17 is a radial cross-sectional view of the 16P18S motor according to a sixth embodiment.
FIG. 18 is a radial cross-sectional view of a 16P18S motor according to a seventh embodiment.
FIG. 19 is a table showing an example arrangement of partial windings of four-system stator windings in a 20P18S motor.
FIG. 20 is a radial cross-sectional view of the 20P18S motor according to an eighth embodiment.
FIG. 21 is a radial cross-sectional view of a 28P36S motor according to a ninth embodiment.
FIG. 22 is a diagram showing another example arrangement of lead wires of stator windings.
FIG. 23 is a diagram showing another example arrangement of lead wires of stator windings.
FIG. 24 is a diagram showing another example arrangement of lead wires of stator windings.

### DETAILED DESCRIPTION

Several embodiments of a rotary electric machine will be described with reference to the drawings. The following first through ninth embodiments are collectively referred to as "the present embodiment." In the following embodiments, substantially same structural parts are designated with the same reference numerals thereby to simplify the description. The rotary electric machine of the present embodiment is, for example, applied to an electric power steering apparatus of a vehicle, and serves as a motor that outputs steering assist torque. It is constituted, for example, by a permanent magnet type three-phase brushless motor. In the following description of the embodiments, a "motor 10" corresponds to the rotary electric machine. In addition, the unit "degree," which represents electrical angle or phase, is denoted by the symbol "°."

### Motor Drive System

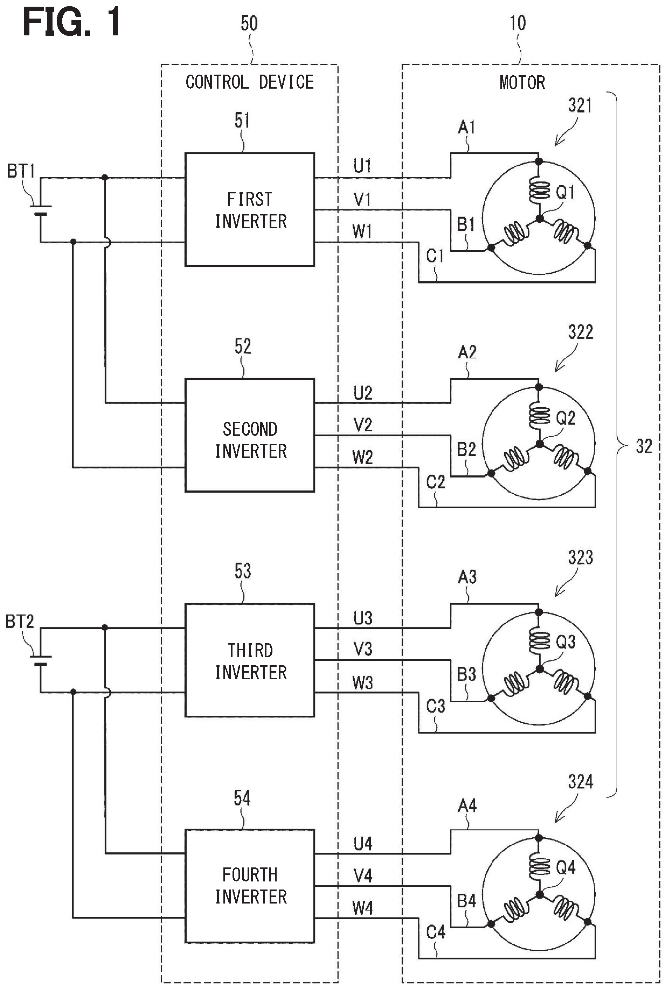

First, referring to FIG. 1, an overall configuration of a four-system motor drive system for driving the motor 10 of the present embodiment will be described. In this specification, a series of units comprising an inverter and a stator winding supplied with three-phase electric current from the inverter is referred to as a "system." A four-system configuration refers to a system in which four such units are redundantly provided. The four-system motor drive system includes a control device 50 having four inverters 51 to 54, and the motor 10 having four sets of stator windings 321 to 324. Hereinafter, a "first inverter 51" and a "second stator winding 322" respectively mean the "inverter 51 of a first system" and the "stator winding 322 of a second system."

The inverters 51 to 54 are each configured by switching elements ,for example, metal oxide semiconductor field effect transistor (MOSFET), of upper and lower arms of three phases (namely, U-phase, V-phase, and W-phase) connected in a bridge configuration. The inverters 51 to 54 perform switching operations in accordance with drive signals commanded by the driver of the control device 50, thereby converting DC power from batteries BT1 and BT2 into three-phase AC power and supplying three-phase electric currents to the stator windings 321 to 324.

In the configuration example of FIG. 1, the first inverter 51 and the second inverter 52 are connected in parallel to a common battery BT1, and the third inverter 53 and the fourth inverter 54 are connected in parallel to a common battery BT2. However, not limited to this configuration, and the four inverters 51 to 54 may also be connected to four separate batteries, respectively. Furthermore, if the possibility of battery failure or depletion is low, the four inverters 51 to 54 may be connected in parallel to a single battery.

The first stator winding 321 is supplied with three-phase currents U1, V1, and W1 from the first inverter 51. The second stator winding 322 is supplied with three-phase currents U2, V2, and W2 from the second inverter 52. The third stator winding 323 is supplied with three-phase currents U3, V3, and W3 from the third inverter 53. The fourth stator winding 324 is supplied with three-phase currents U4, V4, and W4 from the fourth inverter 54. In each stator winding 321 to 324, the three-phase windings are connected at neutral points Q1 to Q4. It should be noted that the three-phase stator windings may be configured not only in a Y-connection (star connection) but also in a delta connection.

Conductors that connect each phase of the stator winding to the corresponding inverter are referred to as "lead wires." The symbols for the lead wires of the U-phase, V-phase, and W-phase are designated as A, B, and C, respectively. For example, a lead wire of the first stator winding 321 for the U-phase is denoted as "A1," a lead wire of the second stator winding 322 for the V-phase is denoted as "B2," and a lead wire of the third stator winding 323 for the W-phase is denoted as "C3."

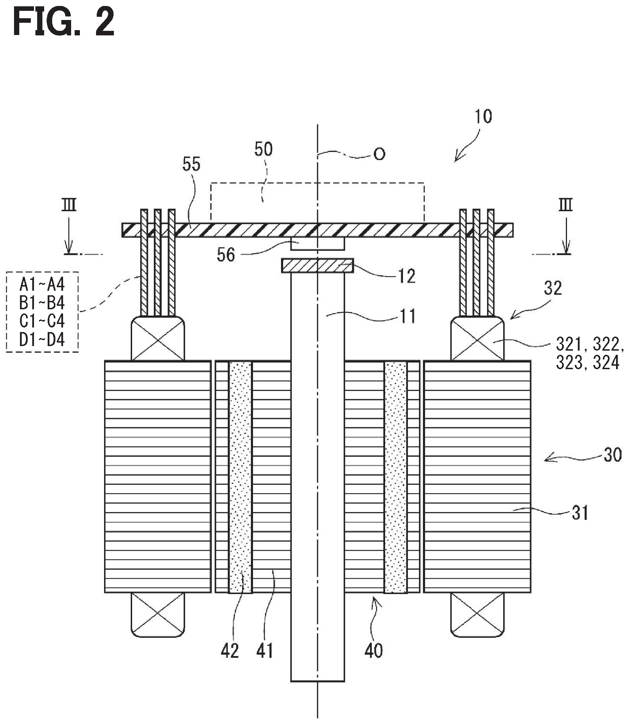

An electric current flowing through each phase of each system is detected by a current sensor (not shown). In addition, a rotational angle of the motor 10 is detected by an angle sensor 56 (see FIG. 2). The control device 50 controls the operation of the inverters 51 to 54 by feedback control based on the phase electric current and rotational angle information.

Here, the three-phase currents U1, V1, and W1 supplied from the first inverter 51, and the three-phase currents U3, V3, and W3 supplied from the third inverter 53 are energized with the same current amplitude and phase. The three-phase currents U2, V2, and W2 supplied from the second inverter 52, and the three-phase currents U4, V4, and W4 supplied from the fourth inverter 54 are energized with the same current amplitude and phase.

The three-phase currents U1, V1, W1, U3, V3, and W3 supplied from the first inverter 51 and the third inverter 53, and the three-phase currents U2, V2, W2, U4, V4, and W4 supplied from the second inverter 52 and the fourth inverter 54 each have a predetermined current phase difference relative to one another. Preferably, the "predetermined current phase difference" is 20° or 40°. The current phase difference of 20° may be set within a range of 15° to 25°, and the current phase difference of 40° may be set within a range of 35° to 45°.

As will be described later, for each tooth around which the stator windings 321 to 324 are wound, a magnetomotive force proportional to the product of the current and the number of turns is generated. The phase of the magnetomotive force is equal to the phase of the electric current. The motor 10 outputs the combined torque generated coaxially by the magnetomotive forces produced by the four sets of stator windings 321 to 324 wound around each tooth.

### Configuration of Motor

Next, with reference to FIGS. 2 to 5, the configuration of the motor 10 will be described. In FIG. 2, only the stator 30, the rotor 40, and a substrate 55 to which the lead wires A1 to A4, B1 to B4, and C1 to C4 are connected are schematically illustrated. Other components commonly found in motor structures, such as a housing and bearings, are omitted from illustration and description.

In a case of an integrated electromechanical motor in which the control device 50 is formed as a single unit, the control device 50 is mounted on the substrate 55, as indicated by a dashed lines. However, the motor 10 of the present embodiment is not limited to an integrated electromechanical type, and may also be a separated electromechanical type motor in which the control device 50 is provided separately and connected via a cable.

The stator 30 and the rotor 40 are provided coaxially with respect to a center line O of a rotation shaft 11. In the following description, an axial direction, a radial direction, and a circumferential direction refer to axial, radial, and circumferential directions of the rotation shaft 11, respectively. The stator 30 includes an annular stator core 31 and three-phase stator windings 32. The stator winding 32 includes four systems of stator windings 321 to 324. The stator core 31 is formed, for example, by laminating thin magnetic steel sheets. The first to fourth stator windings 321 to 324 are each supplied with three-phase current from the first to fourth inverters 51 to 54, respectively, to generate magnetomotive force. As a result, a rotating magnetic field is formed in the stator 30.

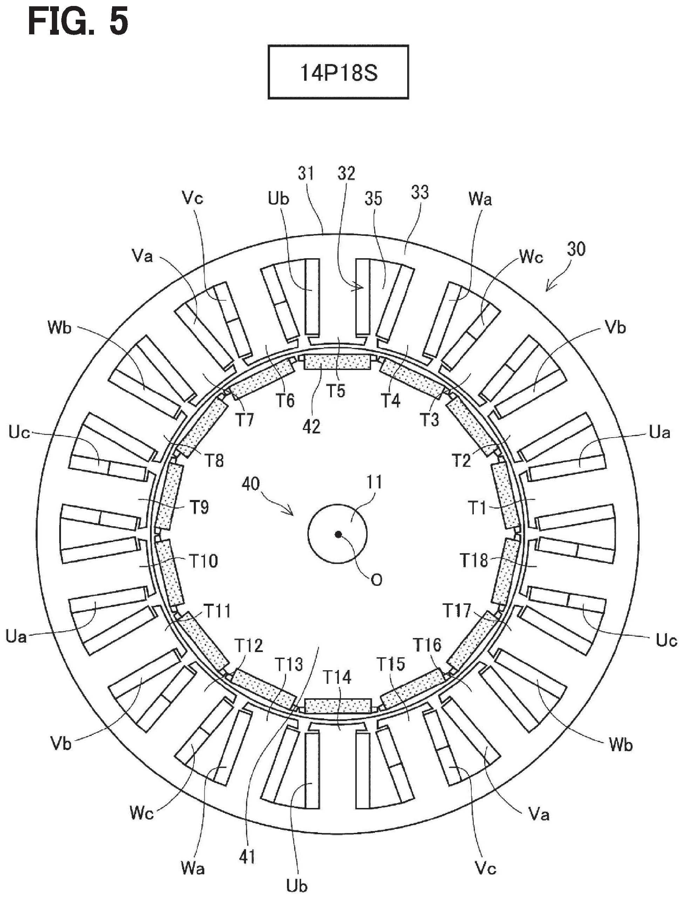

The rotor 40 is rotatably provided on a radially inner side of the stator 30. The rotor 40 has a rotor core 41 made of a magnetic material and magnetic poles 42, which are fixed to the rotor core 41 and have alternating polarity in the circumferential direction. The magnetic poles 42 are composed of permanent magnets. The rotation shaft 11 is fixed at a center part of the rotor core 41. The rotor 40 rotates integrally with the rotation shaft 11 by means of the rotating magnetic field generated by the stator 30. The configuration of the stator 30 and the rotor 40 in the circumferential direction will be described later with reference to FIG. 5.

A sensor magnet 12 is fixed to an end of the rotation shaft 11 on the substrate 55 side. At a portion of a surface of the substrate 55 on the stator 30 and rotor 40 side (a lower surface in FIG. 2) facing the sensor magnet 12, an angle sensor 56 such as a Hall element or MR element is provided. The angle sensor 56 detects the rotation angle of the rotor 40 based on changes in the magnetic field of the sensor magnet 12. To improve the detection accuracy of the angle sensor 56, it is necessary to reduce an influence of external disturbance magnetic flux.

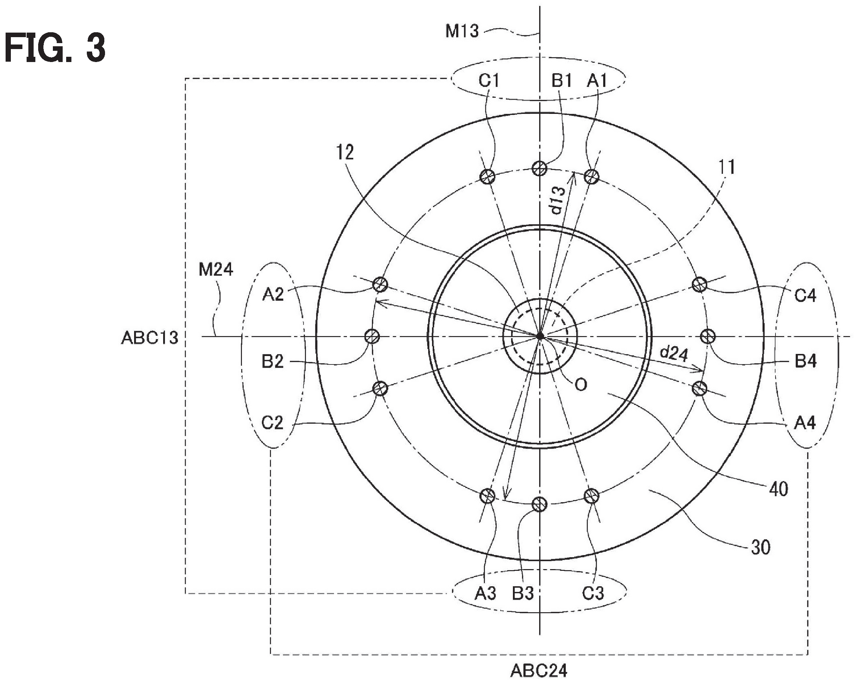

FIG. 3 shows an example arrangement of the lead wires A1 to A4, B1 to B4, and C1 to C4 of the stator windings 321 to 324 as viewed from the substrate 55 side. The lead wires A1, B1, and C1 of the first stator winding 321 connected to the first inverter 51, and the lead wires A3, B3, and C3 of the third stator winding 323 connected to the third inverter 53, are arranged symmetrically with respect to each phase about the rotation shaft 11. The lead wires A2, B2, and C2 of the second stator winding 322 connected to the second inverter 52, and the lead wires A4, B4, and C4 of the fourth stator winding connected to the fourth inverter 54, are arranged symmetrically with respect to each phase about the rotation shaft 11. The arrangement of the lead wires A2, B2, and C2 of the second system and the lead wires A4, B4, and C4 of the fourth system shown in FIG. 3 is configured as a "left 2 - right 4" arrangement. It is also possible to use a "left 4 - right 2" arrangement, in which the lead wires A2 and A4, B2 and B4, and C2 and C4 are respectively swapped from the arrangement shown in FIG. 3.

Here, "symmetrical about the rotation shaft 11" strictly means "symmetrical about the center line O of the rotation shaft 11." By arranging lead wires, through which electric currents of the same amplitude and phase flow, at positions equidistant from the rotation shaft 11, disturbance magnetic flux is canceled out on the rotation shaft 11. As a result, in the angle sensor 56, which detects the rotational angle of the rotor 40 based on changes in the magnetic field of the sensor magnet 12, errors due to disturbance magnetic flux can be minimized.

The lead wires A1, B1, and C1 of the first stator winding 321 and the lead wires A3, B3, and C3 of the third stator winding 323 are collectively referred to as a "first lead wire group ABC13." Similarly, the lead wires A2, B2, and C2 of the second stator winding 322 and the lead wires A4, B4, and C4 of the fourth stator winding are collectively referred to as a "second lead wire group ABC24." In the arrangement example shown in FIG. 3, a center line M13 of the first lead wire group ABC13 and a center line M24 of the second lead wire group ABC24 are orthogonal to each other.

In addition, in the first lead wire group ABC13 and the second lead wire group ABC24, a distance between lead wires of the same phase that are symmetrically arranged is referred to as an opposed distance d13 and d24, respectively. In the arrangement example shown in FIG. 3, furthermore, the opposed distances d13 and d24 of both lead wire groups ABC13 and ABC24 are equal. In other words, the four sets of lead wires A1 to A4, B1 to B4, and C1 to C4 are arranged with 90° rotational symmetry about the rotation shaft 11. Accordingly, an arrangement with excellent symmetry is achieved.

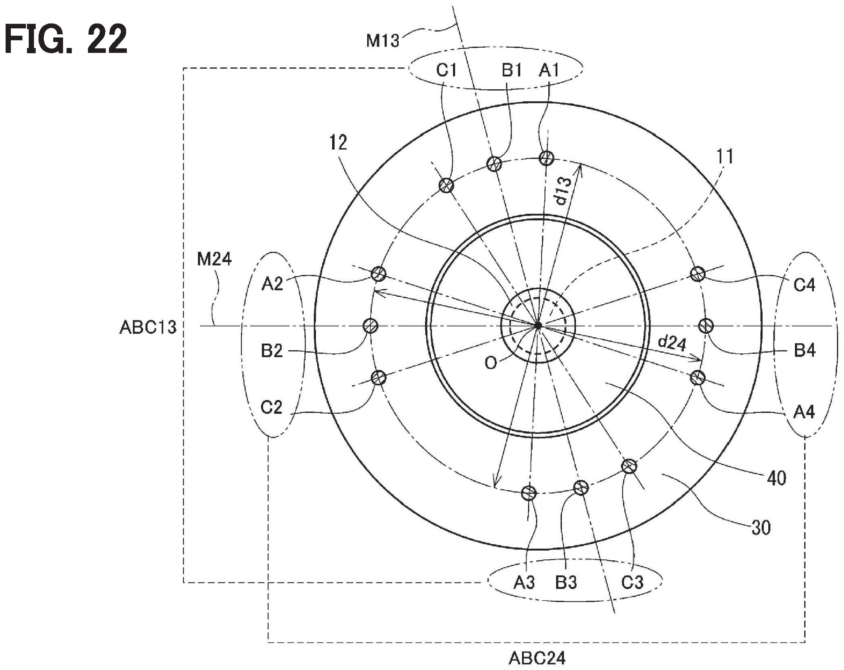

However, it is not an essential requirement for the center lines M13 and M24 of both lead wire groups ABC13 and ABC24 to be orthogonal, nor for the opposed distances d13 and d24 of both lead wire groups ABC13 and ABC24 to be equal. Another example of the arrangement of lead wires A1 to A4, B1 to B4, and C1 to C4, different from the arrangement example shown in FIG. 3, will be described later as another embodiment with reference to FIGS. 22 to 24.

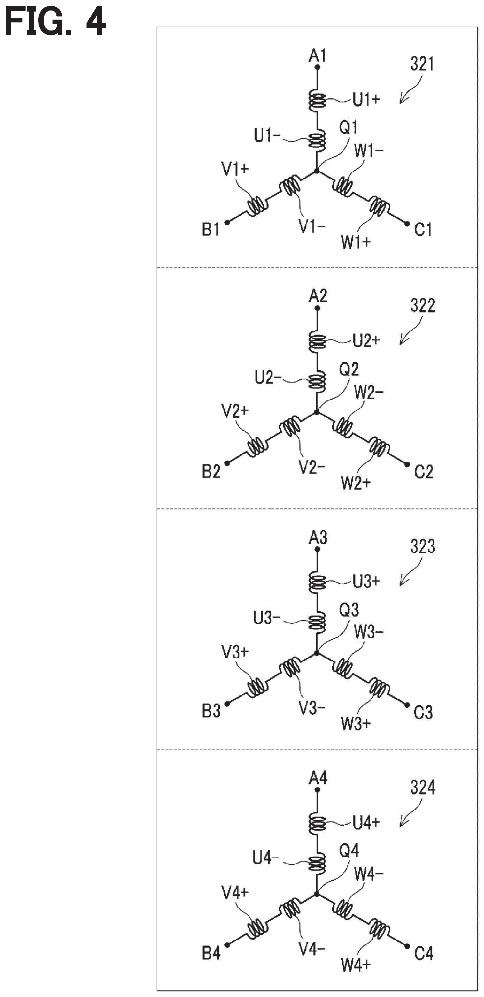

Next, with reference to FIG. 4, wires of each stator winding 321 to 324 will be described. The "+" and "-" at an end of each symbol indicate a direction of the magnetomotive force generated according to a winding direction of the partial windings for the same current direction. A winding mode of a partial winding in which the magnetomotive force is generated in a positive direction is referred to as a "forward winding," while a winding mode of a partial winding in which the magnetomotive force is generated in a reverse direction is referred to as a "reverse winding." The electric current flowing through the forward winding (+) partial winding and the electric current flowing through the reverse winding (-) partial winding have a phase difference of 180 electrical degrees. In the present embodiment, by arranging a combination of forwardwinding partial windings and reverse-winding partial windings on each tooth, it is possible to set a desired magnetomotive force phase difference.

The first stator winding 321 is configured such that U-phase partial windings U1+ and U1- are connected in series, V-phase partial windings V1+ and V1- are connected in series, and W-phase partial windings W1+ and W1- are connected in series. One end of the series connection is connected to the neutral point Q1. At the other end of the series connection, the partial windings of the U-phase, V-phase, and W-phase are connected to the lead wires A1, B1, and C1, respectively. The lead wires A1, B1, and C1 are connected to the first inverter 51.

Similarly, the second stator winding 322 is configured such that U-phase partial windings U2+ and U2- are connected in series, V-phase partial windings V2+ and V2- are connected in series, and W-phase partial windings W2+ and W2- are connected in series. One end of the series connection is connected to the neutral point Q2. At the other end of the series connection, the partial windings of the U-phase, V-phase, and W-phase are connected to the lead wires A2, B2, and C2, respectively. The lead wires A2, B2, and C2 are connected to the second inverter 52.

Similarly, the third stator winding 323 is configured such that U-phase partial windings U3+ and U3- are connected in series, V-phase partial windings V3+ and V3- are connected in series, and W-phase partial windings W3+ and W3- are connected in series. One end of the series connection is connected to the neutral point Q3. At the other end of the series connection, the partial windings of the U-phase, V-phase, and W-phase are connected to the lead wires A3, B3, and C3, respectively. The lead wires A3, B3, and C3 are connected to the third inverter 53.

Similarly, the fourth stator winding 324 is configured such that U-phase partial windings U4+ and U4- are connected in series, V-phase partial windings V4+ and V4- are connected in series, and W-phase partial windings W4+ and W4- are connected in series. One end of the series connection is connected to the neutral point Q4. At the other end of the series connection, the partial windings of the U-phase, V-phase, and W-phase are connected to the lead wires A4, B4, and C4, respectively. The lead wires A4, B4, and C4 are connected to the fourth inverter 54.

Referring to FIG. 5, the circumferential configuration of the stator 30 and the rotor 40 will be described, taking an 18-slot, 14-pole IPM (Interior Permanent Magnet) motor as an example. Hereinafter, the number of magnetic poles of the rotor 40 and the number of slots between the teeth of the stator 30 will be denoted as "P" for the number of poles and "S" for the number of slots. For example, a configuration with 14 poles and 18 slots will be expressed as "14P18S." The configuration with 14P18S is a representative configuration of the present embodiment and corresponds to the first through fourth embodiments. It should be noted that FIG. 5 is a radial cross-sectional view of the stator 30 and the rotor 40, but for clarity, the cross-sectional hatching is omitted. In addition, although the cross-sections of the stator windings 32 normally appear as numerous circles, they are schematically shown as rectangular areas without hatching. It should be noted that a size of the rectangular areas does not correlate with the actual cross-sectional area of the coil bodies.

The rotor 40 will be described first. In the 14P18S motor, fourteen magnetic poles 42 are fixed to the rotor core 41 so that their polarities alternate in the circumferential direction. The fourteen magnetic poles 42 form seven pairs of magnetic poles. In the IPM motor, the magnetic poles 42 are embedded in the rotor core 41. However, not limited to IPM motors, an SPM (Surface Permanent Magnet) motor in which the magnetic poles 42 are provided on the surface of the rotor core 41 may also be used.

Next, regarding the stator 30, the stator core 31 includes an annular back yoke 33 and teeth T1 to T18 that protrude radially inward from the back yoke 33. The teeth T1 to T18 are provided at predetermined intervals in the circumferential direction, and slots 35 are formed between adjacent teeth. The number of teeth is equal to the number of slots 35, and there are eighteen in the 14P18S. In the following radial cross-sectional view, a tooth T1 of the stator 30 is shown on a right side of the page, and the remaining seventeen teeth T2 to T18 are shown at equal intervals in the circumferential direction, arranged counterclockwise from the tooth T1.

The eighteen teeth T1 to T18 are arranged in the circumferential direction at intervals of a mechanical angle of 20°. The interval of 20° mechanical angle is converted to an electrical angle based on the number of magnetic poles P, that is, the number of pole pairs (P/2). Since a mechanical angle of {360/(P/2)}° corresponds to an electrical angle of 360°, a mechanical angle of 20° is converted to an electrical angle of (P×10)°. In the case of 14P18S, the interval between adjacent teeth in the circumferential direction is 140° electrical.

The stator winding 32 is housed in the slots 35 and wound around teeth T1 to T18. By winding the stator winding 32 around each of the teeth T1 to T18, a "coil body" is formed. The motor 10 is provided with three types of coil bodies for each phase: a first coil body, a second coil body, and a third coil body. That is, the motor 10 includes: a first coil body Ua for the U-phase, a first coil body Va for the V-phase, a first coil body Wa for the W-phase; a second coil body Ub for the U-phase, a second coil body Vb for the V-phase, a second coil body Wb for the W-phase; and a third coil body Uc for the U-phase, a third coil body Vc for the V-phase, and a third coil body Wc for the W-phase.

The first coil bodies Ua, Va, and Wa are formed by winding the first stator winding 321 or the third stator winding 323 of the U-phase, V-phase, and W-phase, respectively, among the three phases, around the first teeth. In the example of FIG. 5, the teeth T1, T4, T7, T10, T13, and T16 correspond to the first teeth. The first coil bodies Ua, Va, and Wa are illustrated in a pair of rectangular areas on both sides of the first teeth.

The second coil bodies Ub, Vb, and Wb are formed by winding the second stator winding 322 or the fourth stator winding 324 of the U-phase, V-phase, and W-phase, respectively, among the three phases, around the second teeth. In the example of FIG. 5, the teeth T2, T5, T8, T11, T14, and T17 correspond to the second teeth. The second coil bodies Ub, Vb, and Wb are illustrated in a pair of rectangular areas on both sides of the second teeth.

The third coil bodies Uc, Vc, and Wc are formed by winding either the first stator winding 321 or the third stator winding 323 of one of the three phases, and either the second stator winding 322 or the fourth stator winding 324 of one of the three phases, around the third teeth, respectively. In the example of FIG. 5, the teeth T3, T6, T9, T12, T15, and T18 correspond to the third teeth. The third coil bodies Uc, Vc, and Wc are illustrated in two pairs of rectangular areas on both sides of the third teeth, namely, the radially inner areas and the radially outer areas.

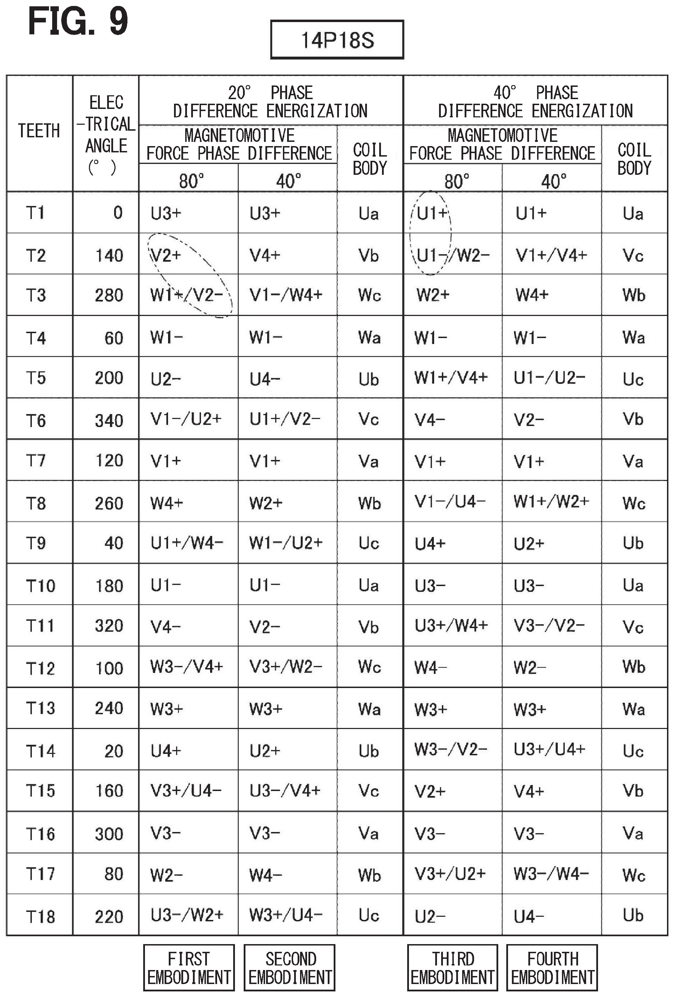

FIG. 5 does not show the specific phase and system arrangement of the stator windings 321 to 324 wound around each of the teeth T1 to T18. In FIGS. 9 to 21 below, examples of phase and system arrangements of the stator windings 32 wound around each tooth are shown, according to the current phase difference between the first and third inverters 51, 53 and the second and fourth inverters 52, 54, as well as the resulting phase difference of the combined magnetomotive force.

### Combination of Phase-Shifted Energization and Magnetomotive Force

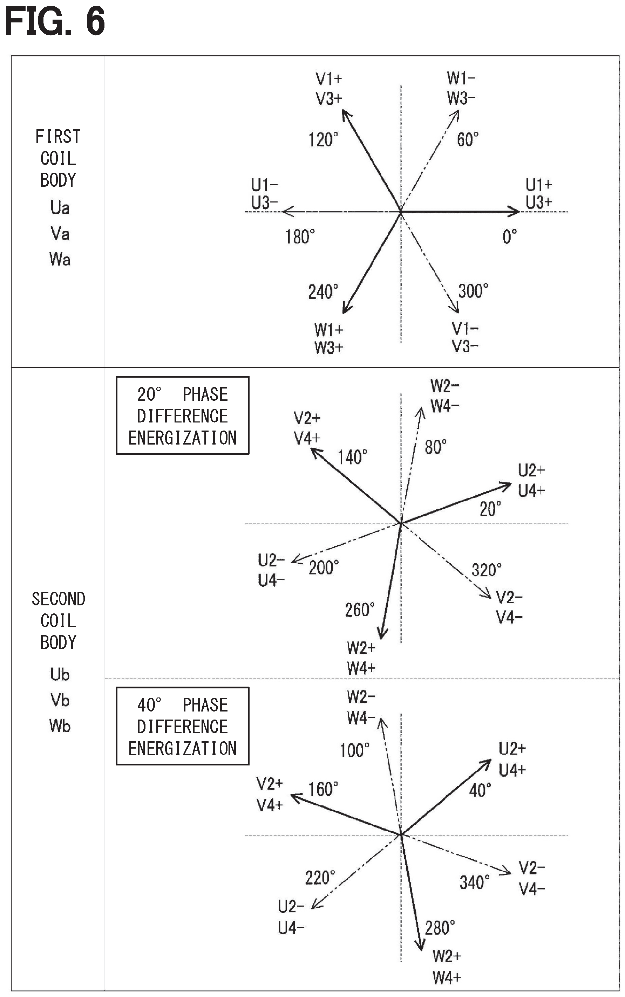

Next, with reference to FIGS. 6 to 8, phase-shifted energization by the four inverter systems 51 to 54, and the combination of magnetomotive forces in the third coil bodies Uc, Vc, and Wc will be explained. An energization method in which the electric current amplitudes supplied by the first and third inverters 51, 53 and the second and fourth inverters 52, 54 are equal and the current phase difference is set to 20° is referred to as "20° phase-difference energization," and a energization method in which the current phase difference is set to 40° is referred to as "40° phase-difference energization."

FIG. 6 shows the current phases of each phase supplied to the first coil bodies Ua, Va, Wa and the second coil bodies Ub, Vb, Wb during 20° phase-difference energization and 40° phase-difference energization. The phases of each phase of the three-phase currents supplied to the first coil bodies Ua, Va, Wa from the first inverter 51 and the third inverter 53 are used as reference phases. For example, in a case of the U-phase, the current phase of 0° in the positively wound partial windings U1+ and U3+ of the first and third stator windings 321 and 323 serves as the reference phase. The phases of each phase of the three-phase currents supplied to the second coil bodies Ub, Vb, Wb from the second inverter 52 and the fourth inverter 54 are set so that the current phase difference from the reference phase is 20° or 40°.

The three-phase currents supplied to the first coil bodies Ua, Va, Wa from the first inverter 51 and the third inverter 53 are represented by equations (1.1) to (1.6). The common current amplitude I for the four systems is referred to as a fundamental current amplitude I.$U 1 + = U 3 + = lsin \left(θ\right)$ $W 1 - = W 3 - = lsin \left(θ-60\right)$ $V 1 + = V 3 + = lsin \left(θ-120\right)$ $U 1 - = U 3 - = lsin \left(θ-180\right)$ $W 1 + = W 3 + = lsin \left(θ-240\right)$ $V 1 - = V 3 - = lsin \left(θ-300\right)$

The three-phase currents supplied to the second coil bodies Ub, Vb, Wb from the second inverter 52 and the fourth inverter 54 by energization with a 20° phase difference are represented by equations (2.1) to (2.6).$U 2 + = U 4 + = lsin \left(θ-20\right)$ $W 2 - = W 4 - = lsin \left(θ-80\right)$ $V 2 + = V 4 + = lsin \left(θ-140\right)$ $U 2 - = U 4 - = lsin \left(θ-200\right)$ $W 2 + = W 4 + = lsin \left(θ-260\right)$ $V 2 - = V 4 - = lsin \left(θ-320\right)$

The three-phase currents supplied to the second coil bodies Ub, Vb, Wb from the second inverter 52 and the fourth inverter 54 by energization with a 40° phase difference are represented by equations (3.1) to (3.6).$U 2 + = U 4 + = lsin \left(θ-40\right)$ $W 2 - = W 4 - = lsin \left(θ-100\right)$ $V 2 + = V 4 + = lsin \left(θ-160\right)$ $U 2 - = U 4 - = lsin \left(θ-220\right)$ $W 2 + = W 4 + = lsin \left(θ-280\right)$ $V 2 - = V 4 - = lsin \left(θ-340\right)$

The summation of currents and magnetomotive force in the third coil bodies Uc, Vc, and Wc will be explained below. When energization is performed with a phase difference of 20 degrees, the phase of the three-phase currents generated by summing in the third coil bodies Uc, Vc, and Wc matches the phase of the three-phase currents generated when energization is performed with a phase difference of 40 degrees. Additionally, when energization is performed with a phase difference of 40 degrees, the phase of the three-phase currents generated by summing in the third coil bodies Uc, Vc, and Wc matches the phase of the three-phase currents generated when energization is performed with a phase difference of 20 degrees. In either case of phase difference energization, the phase difference between the currents flowing through the second coil bodies Ub, Vb, and Wb and the third coil bodies Uc, Vc, and Wc with respect to the currents flowing through the first coil bodies Ua, Va, and Wa is 20 degrees for one and 40 degrees for the other.

As a result, the 6th and 12th electrical harmonic components are cancelled, making it possible to reduce 6th and 12th electrical torque ripples.

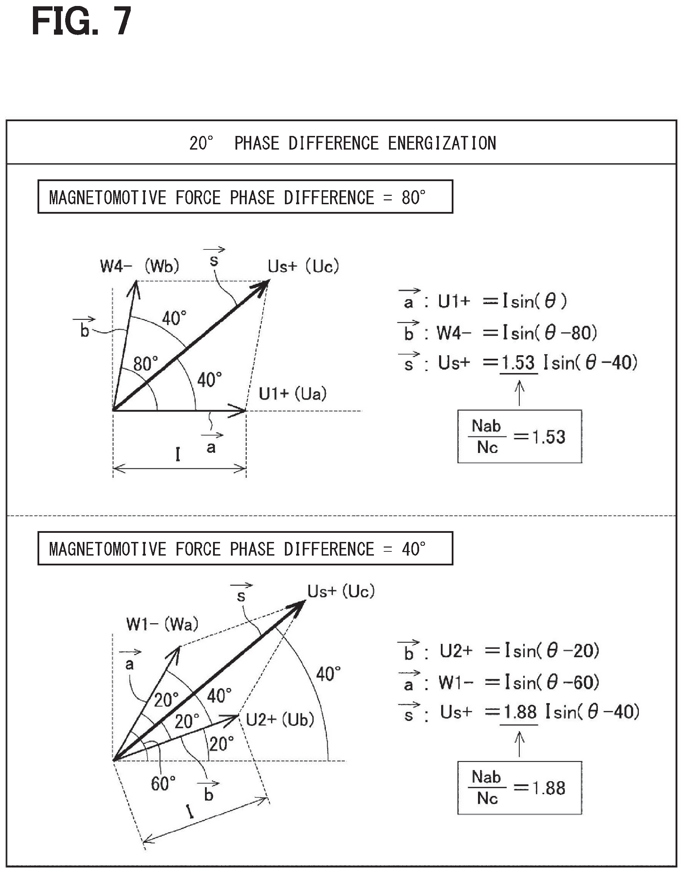

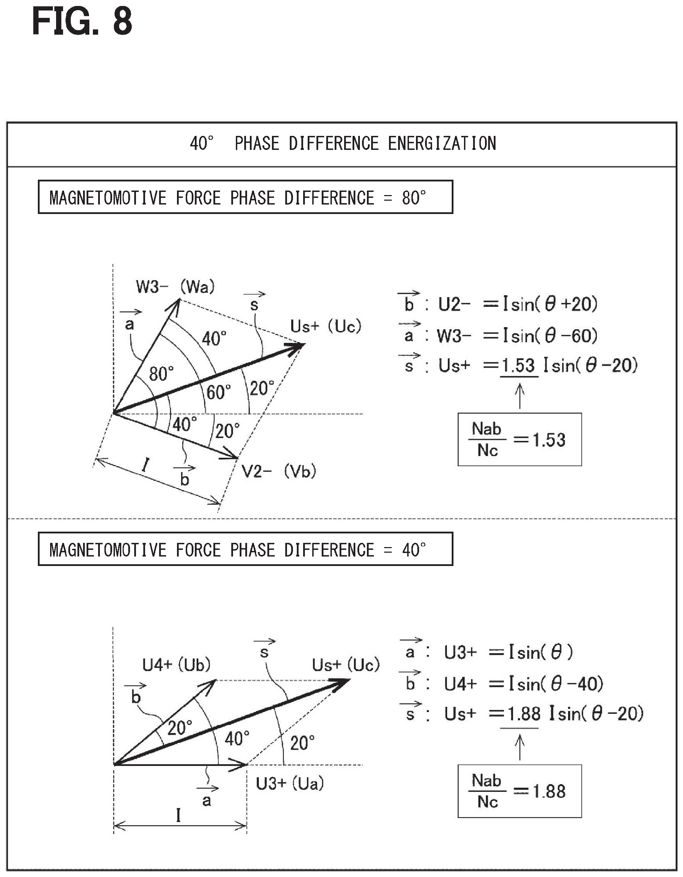

With reference to FIGS. 7 and 8, the phase difference and amplitude of the currents and magnetomotive force summed in the third coil bodies Uc, Vc, Wc during the 20° phase difference energization and the 40° phase difference energization will be explained. The combination of partial windings of the stator winding 32 summed as shown in FIG. 7 corresponds to the tooth T9, which is the third tooth in the first and second embodiments. The combination of summed partial windings of the stator winding 32 shown in FIG. 8 corresponds to the tooth T14, which is the third tooth in the third and fourth embodiments. Here, a general explanation is provided, and details will be described later in each embodiment.

The electric current flowing through the partial winding of the first stator winding 321 or the third stator winding 323 wound around the third tooth, and the electric current flowing through the partial winding of the second stator winding 322 or the fourth stator winding 324 wound around the third tooth, are referred to as a "first current vector a" and a "second current vector b," respectively. Further, the electric current resulting from the sum of current vector a and current vector b, which flows through the third coil bodies Uc, Vc, and Wc, is referred to as a "summed current vector s." In FIG. 7 and FIG. 8, the current vector a, the current vector b, and the summed current vector s are represented using vector notation.

The amplitudes of the first current vector a and the second current vector b are equal to the fundamental current amplitude I. Furthermore, a phase difference between the first current vector a and the second current vector b is defined as a "summed phase difference." Since the phase of the magnetomotive force matches the current phase, the "summed phase difference" is also a phase difference between the magnetomotive force generated by the first current vector a and the magnetomotive force generated by the second current vector b. In other words, the "summed phase difference" is defined in two ways: a first summed phase difference pd1 and a second summed phase difference pd2, as described below.

The first summed phase difference pd1 is a summed phase difference between the magnetomotive force generated by the partial winding of the first stator winding 321 or the third stator winding 323 wound around the third tooth, and the magnetomotive force generated by the partial winding of the second stator winding 322 or the fourth stator winding 324 wound around the same third tooth.

The second summed phase difference is a summed phase difference between the electric current flowing through the partial winding of the first stator winding 321 or the third stator winding 323 wound around the third tooth, and the electric current flowing through the partial winding of the second stator winding 322 or the fourth stator winding 324 wound around the same third tooth.

These summed phase differences pd1 and pd2 are set so as to satisfy the following conditions: a first condition G1 or a second condition G2. The phrase "within a predetermined phase range including 20° in electrical angle" includes both 20° and 40° in electrical angle.

First condition: The phase differences, in terms of magnetomotive force, between each phase's third coil body Uc, Vc, Wc and each phase's first coil body Ua, Va, Wa, as well as the phase differences between each phase's second coil body Ub, Vb, Wb and each phase's third coil body Uc, Vc, Wc, fall within a predetermined phase range that includes 20° in electrical angle.

Second condition: The phase differences, in terms of magnetomotive force, between each phase's second coil body Ub, Vb, Wb and each phase's first coil body Ua, Va, Wa, as well as the phase differences between each phase's third coil body Uc, Vc, Wc and each phase's second coil body Ub, Vb, Wb, fall within a predetermined phase range that includes 20° in electrical angle.

Hereinafter, the first summed phase difference will be referred to as a "magnetomotive force phase difference." In the description of the embodiment, the magnetomotive force phase difference is mainly described as the summed phase difference. The magnetomotive force phase difference is set to either 80° or 40° electrical angle. The magnetomotive force phase difference of 80° electrical angle may be set within the range of 72° to 88° electrical angle, and the magnetomotive force phase difference of 40° electrical angle may be set within the range of 32° to 48° electrical angle.

The amplitude of the magnetomotive force is proportional to the product of the current amplitude and the number of windings. Therefore, in order to match the amplitude of the magnetomotive force generated in the third coil bodies Uc, Vc, and Wc by summation to the amplitude of the magnetomotive force generated in the first coil bodies Ua, Va, Wa and the second coil bodies Ub, Vb, Wb, it is necessary to set the number of windings so that a ratio of the number of windings becomes the reciprocal of the current amplitude ratio.

The number of windings of the first stator winding 321 or the third stator winding 323 wound around the first tooth, and the number of windings of the second stator winding 322 or the fourth stator winding 324 wound around the second tooth, are each referred to as "Nab". In addition, the number of windings of the first stator winding 321 or the third stator winding 323 wound around the third tooth, and the number of windings of the second stator winding 322 or the fourth stator winding 324 wound around the third tooth, are each referred to as "Nc". By determining a ratio of the number of windings (Nab/Nc) based on the ratio of the current amplitude of the combined current vector s to the basic current amplitude I, a magnetomotive force with an amplitude equivalent to that of the first coil bodies Ua, Va, Wa and the second coil bodies Ub, Vb, Wb is generated in the third coil bodies Uc, Vc, Wc. As a result, the motor 10 is able to output uniform torque.

Upper sections of FIGS. 7 and 8 show the sum of current vector a and current vector b in a case where the magnetomotive force phase difference is 80°. In this case, the current amplitude of the combined U-phase current Us+ is 1.53 times the basic current amplitude I. Therefore, in order to include "Nab/Nc = 1.53" within the range, the number of windings of the first teeth, the second teeth, and the third teeth are set so as to satisfy a relationship "1.4 ≤ Nab/Nc ≤ 1.6".

Lower sections of FIGS. 7 and 8 show the sum of current vector a and current vector b in a case where the magnetomotive force phase difference is 40°. In this case, the current amplitude of the combined U-phase current Us+ is 1.88 times the basic current amplitude I. Therefore, in order to include "Nab/Nc = 1.88" within the range, the number of windings of the first teeth, the second teeth, and the third teeth are set so as to satisfy the relationship "1.9 ≤ Nab/Nc ≤ 2.0".

When a dual-system motor, in which the magnetic force phase difference is set to 80° or 40°, is energized with a 20° phase difference, the 6th and 12th order torque ripples are reduced compared to energization with the same phase difference. In the present embodiment, by applying a 20° or 40° phase difference current to a four-system motor with enhanced redundancy compared to a two-system motor, it is possible to reduce the 6th and 12th order electrical torque ripples.

### Embodiment of Motor

Next, with reference to FIGS. 9 to 21, specific examples of the arrangement of partial windings of the four-system stator windings 321 to 324, as determined by the combination of current phase difference and magnetomotive force phase difference for each configuration of the number of magnetic poles and the number of slots, will be described as the first to ninth embodiments.

In the first to eighth embodiments, the number of slots is 18. The first to fourth embodiments are 14 poles and 18 slots (14P18S). The fifth embodiment is 22 poles and 18 slots (22P18S), the sixth and seventh embodiments are 16 poles and 18 slots (16P18S), and the eighth embodiment is 20 poles and 18 slots (20P18S). The 14P18S motor and the 22P18S motor correspond to the configuration where "m = 1" in the general form of "the number of magnetic poles is (18 ± 4) × m (where m is an integer equal to or greater than 1), and the number of slots is 18 × m." The 16P18S motor and the 20P18S motor correspond to the configuration where "n = 1" in the general form of "the number of magnetic poles is (18 ± 2) × n (where n is an integer equal to or greater than 1), and the number of slots is 18 × n."

Compared to the 16P18S motor and the 20P18S motor, the 14P18S motor and the 22P18S motor have electromagnetic forces distributed at four locations in the circumferential direction at 90° intervals, resulting in better balance and being advantageous for the suppression of noise and vibration.

### First Embodiment

FIG. 9 shows a table illustrating an example of the arrangement of partial windings of the four-system stator windings 321 to 324 in the 14P18S motor. FIG. 9 shows the partial windings of the four-system stator windings 321 to 324 and the types of coil bodies, determined according to the electrical angle corresponding to each tooth T1 to T18, the current phase difference between systems, and the combination of magnetomotive force. One type of partial winding is arranged in the first tooth and the second tooth. In the third tooth, two types of partial windings indicated before and after the "/" are arranged at different radial positions. It is also acceptable to interchange the radial positions of the two types of partial windings wound on the third tooth.

The case where the magnetomotive force phase difference is 80° with a 20° phase difference in energization is the first embodiment. The case where the magnetomotive force phase difference is 40° with a 20° phase difference in energization is the second embodiment. The case where the magnetomotive force phase difference is 80° with a 40° phase difference in energization is the third embodiment. The case where the magnetomotive force phase difference is 40° with a 40° phase difference in energization is the fourth embodiment.

In the first embodiment, by winding the U-phase partial winding U3+ (electrical angle 0°) of the third stator winding 323 onto the first tooth, which is the tooth T1, the first coil body Ua of the U-phase is formed. By winding the V-phase partial winding V2+ (electrical angle 140° due to 20° phase difference energization) of the second stator winding 322 onto the second tooth, which is the tooth T2, the second coil body Vb of the V-phase is formed.

By winding the W-phase partial winding W1+ (electrical angle 240°) of the first stator winding 321, and the V-phase partial winding V2- (electrical angle 320° due to 20° phase difference energization) of the second stator winding 322 onto the third tooth, which is the tooth T3, the third coil body Wc of the W-phase is formed. An average of the electrical angles of the two types of partial windings, W1+ and V2-, becomes the electrical angle of the third coil body Wc, which is 280°. The same applies to the remaining teeth T4 to T18. In this way, a total of 24 types of partial windings from the four sets of stator windings 321 to 324 are arranged on six first teeth, six second teeth, and six third teeth.

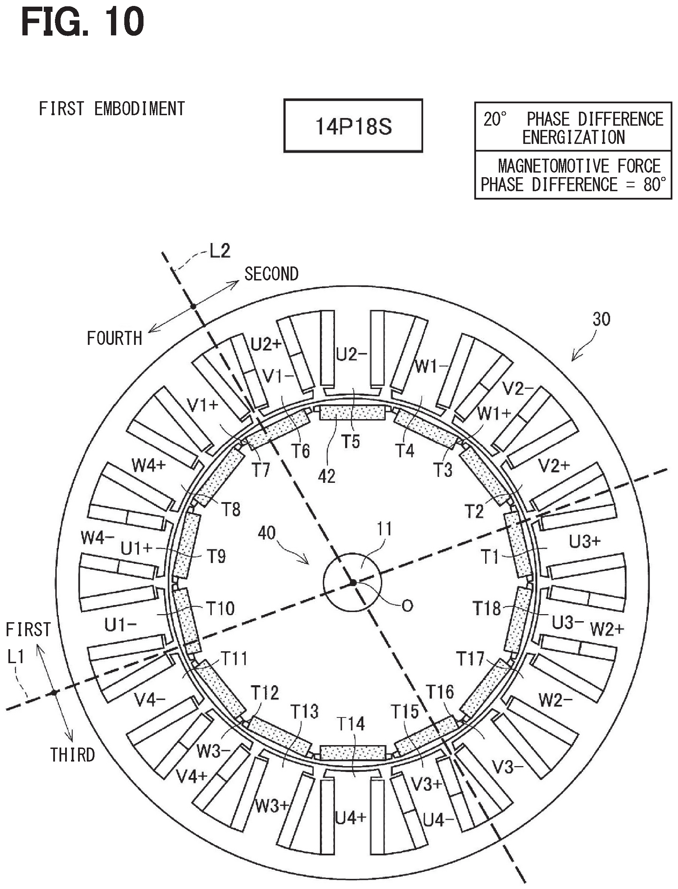

FIG. 10 shows, as the first embodiment, a diagram in a case where the magnetomotive force phase difference is 80° with 20° phase difference energization. FIG. 7 shows, as an example of "magnetomotive force phase difference of 40°," the combined magnetomotive force of the U-phase partial winding U1+ of the first stator winding 321 and the W-phase partial winding W4- of the fourth stator winding 324 in the third coil body Uc, which is wound around the tooth T9 of the first embodiment.

The phase of the combined U-phase current Us+ is 40°, and the current amplitude is 1.53 times the fundamental current amplitude I flowing through the partial windings U1+ / W4- of the first and fourth stator windings 321 and 324. The phase difference between the magnetomotive force of the third coil body Uc and the magnetomotive force of the first coil body Ua, formed by the partial winding U1+, is 40°. The phase difference between the magnetomotive force of the third coil body Uc and the magnetomotive force of the second coil body Wb, formed by the partial winding W4-, is also 40°. With this configuration, the effect of canceling the 6th and 12th order electrical harmonic components is achieved.

In the two-system comparative example, it may be considered an extension of a comparative example to simply distribute the "partial windings of the first stator winding" among the partial windings of the first stator winding 321 and the third stator winding 323, and to simply distribute the "partial windings of the second stator winding" among the partial windings of the second stator winding 322 and the fourth stator winding 324. However, an important point of the present embodiment lies in how the two systems of "partial windings of the first stator winding" are distributed among the partial windings of the first stator winding 321 and the third stator winding 323, and how the two systems of "partial windings of the second stator winding" are distributed among the partial windings of the second stator winding 322 and the fourth stator winding 324. The following is a detailed explanation of this important point.

As shown by a two-dot chain elliptical line in FIG. 9, for example, the partial winding V2+ of the U-phase of the second stator winding 322 is wound around the tooth T2. Additionally, the partial winding V2- of the U-phase of the second stator winding 322 is wound around the adjacent tooth T3 in the circumferential direction. In this manner, in the first embodiment, the first tooth and the third tooth on which the first stator winding 321 of the same phase is wound are arranged adjacent to each other. The second tooth and the third tooth on which the second stator winding 322 of the same phase is wound are also arranged adjacent to each other. The first tooth and the third tooth on which the third stator winding 323 of the same phase is wound are also arranged adjacent to each other. The second tooth and the third tooth on which the fourth stator winding 324 of the same phase is wound are also arranged adjacent to each other. With this arrangement, wiring connections between the teeth are facilitated.

In the configurations of the 14P18S motor and the 22P18S motor, when the magnetomotive force phase difference is 80°, the first and third teeth, as well as the second and third teeth, on which the stator windings of the same phase in the same system are wound, are adjacent to each other in the circumferential direction. On the other hand, in the configurations of the 16P18S motor and the 20P18S motor, when the magnetomotive force phase difference is 40°, the first and third teeth, as well as the second and third teeth, on which the stator windings of the same phase in the same system are wound, are adjacent to each other in the circumferential direction. Therefore, in addition to the first embodiment, the same operational effects can be obtained in the third, fifth, seventh, and ninth embodiments.

Further, in a projected view in ae direction of the rotation shaft 11 shown in FIG. 10, both a first boundary line L1 and a second boundary line L2 are straight lines passing through the rotation shaft 11. The "passing through the rotation shaft 11" strictly means "passing through the center line O of the rotation shaft 11." The first boundary line L1 and the second boundary line L2 have different inclinations and intersect each other at the center line O of the rotation shaft 11.

All of the first teeth and third teeth around which the first stator windings 321 of each phase are wound are arranged in one region based on the first boundary line L1. All of the first teeth and third teeth around which the third stator windings 323 of each phase are wound are arranged in the other region based on the first boundary line L1. All of the second teeth and third teeth around which the second stator windings 322 are wound are arranged in one region based on the second boundary line L2. All of the second teeth and third teeth around which the fourth stator windings 324 are wound are arranged in the other region based on the second boundary line L2.

In FIG. 10, labels "First" to "Fourth" indicated at tips of bidirectional arrows perpendicular to the boundary lines L1 and L2 denote regions where the first to fourth stator windings 321 to 324 are arranged. As a result, the wiring regions of the stator windings 321 to 324 can be separated for each system. Therefore, a length of crossover wires within each system can be shortened.

This configuration is also common to the second to ninth embodiments. Expressed using the vertical and horizontal directions on the plane of the paper in FIG. 10 where the tooth T1 is arranged on a right side, except for the eighth embodiment, the first boundary line L1 extends almost horizontally and divides the teeth T1 to T18 vertically. An area above the first boundary line L1 serves as an arrangement region for the first stator winding 321, and an area below the first boundary line L1 serves as an arrangement region for the third stator winding 323.

The second boundary line L2 extends almost vertically and divides the teeth T1 to T18 horizontally. In embodiments other than the first and third, the area to the left of the second boundary line L2 serves as the arrangement region for the second stator winding 322, and the area to the right of the second boundary line L2 serves as the arrangement region for the fourth stator winding 324. On the other hand, in the first and third embodiments, conversely, the area to the right of the second boundary line L2 serves as the arrangement region for the second stator winding 322, and the area to the left of the second boundary line L2 serves as the arrangement region for the fourth stator winding 324.

Furthermore, by superimposing the arrangement regions of the stator windings 321 to 324 defined by the first boundary line L1 and the second boundary line L2 onto the arrangement of the lead wires A1 to A4, B1 to B4, and C1 to C4 of each system as shown in FIG. 3, the lengths of the lead wires A1 to A4, B1 to B4, and C1 to C4 can be shortened. Therefore, the total winding resistance of the motor 10 can be reduced, and power efficiency can be improved. It is assumed that the viewing directions of FIG. 3 and FIG. 10, etc., are the same. Regarding a left-right arrangement of the lead wires A2, B2, C2 of the second system and A4, B4, C4 of the fourth system shown in FIG. 3, arrangements other than the first and third embodiments may adopt the "left 2 - right 4" configuration, while the first and third embodiments preferably may adopt the "left 4 - right 2" configuration.

### Second Embodiment

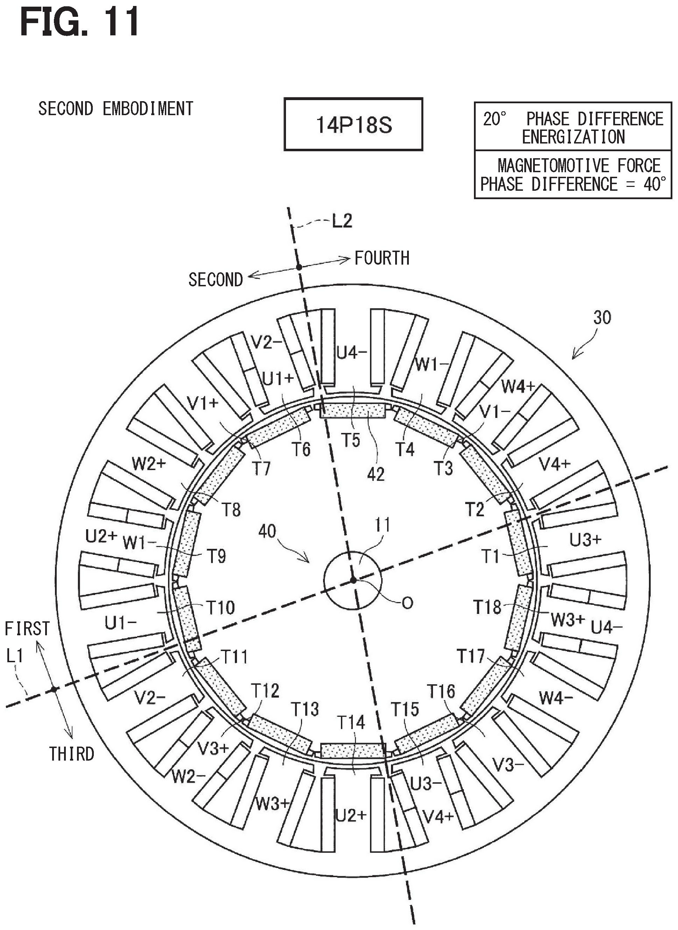

FIG. 11 shows, as a second embodiment, a diagram illustrating a case where the phase difference of the magnetomotive force is 40° with a 20° phase difference in energization. In FIG. 7, as an example of a "magnetomotive force phase difference of 40°," the sum of the magnetomotive forces of the W-phase partial winding W1- of the first stator winding 321 and the U-phase partial winding U2+ of the second stator winding 322, both formed by winding around the tooth T9 of the third coil body Uc in the second embodiment, is shown.

The phase of the combined U-phase current Us+ is 40°, and the current amplitude is 1.88 times the fundamental current amplitude I flowing through the partial windings W1- / U2+ of the first and second stator windings 321 and 322. The phase difference between the magnetomotive force of the first coil body Wa formed by the partial winding W1- and the magnetomotive force of the third coil body Uc is 20°. The phase difference between the magnetomotive force of the second coil body Ub formed by the partial winding U2+ and the magnetomotive force of the third coil body Uc is also 20°.

### Third Embodiment

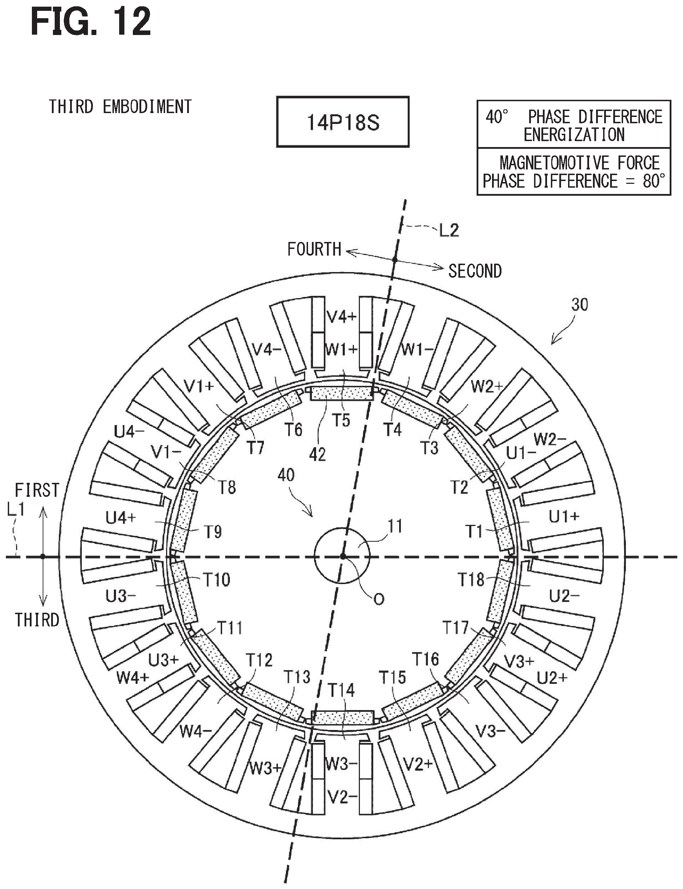

FIG. 12 shows, as a third embodiment, a diagram of a case where the magnetomotive force phase difference is 80° with a 40° phase difference energization. FIG. 8 shows, as an example of a "magnetomotive force phase difference of 80°," the combined magnetomotive force of the W-phase partial winding W3- of the third stator winding 323 and the V-phase partial winding V2- of the second stator winding 322 in the third coil body Uc, which is wound around tooth T14 and formed in the third embodiment.

The phase of the combined U-phase current Us+ is 20°, and the current amplitude is 1.53 times the basic current amplitude I flowing through the partial windings W3- and V2- of the third and second stator windings 323 and 322, respectively. The phase difference between the magnetomotive force of the first coil body Wa formed by the partial winding W3- and the magnetomotive force of the third coil body Uc is 40°. The phase difference between the magnetomotive force of the second coil body Vb formed by the partial winding V2- and the magnetomotive force of the third coil body Uc is also 40°.

### Fourth Embodiment

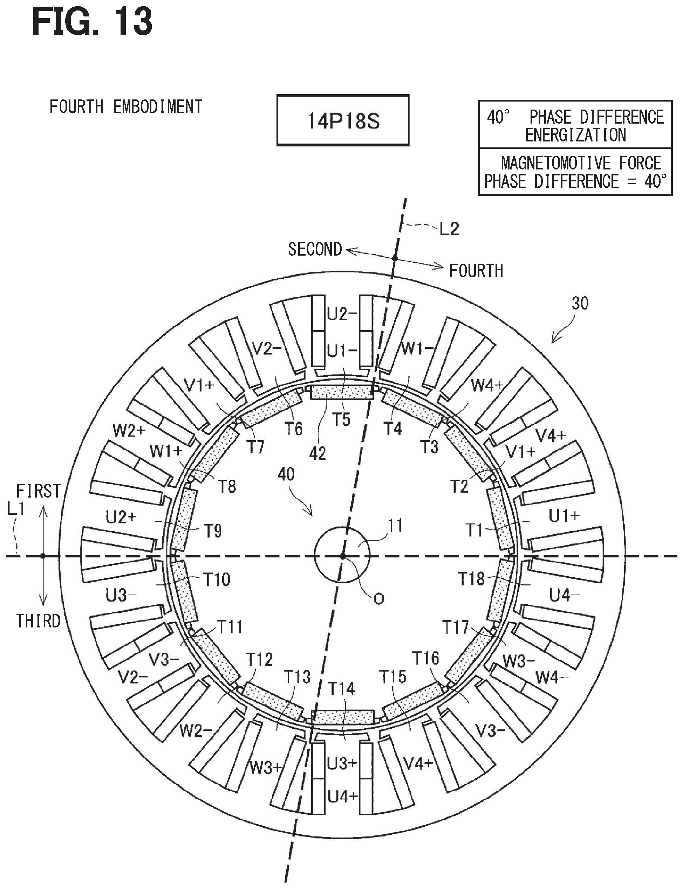

FIG. 13 shows, as a fourth embodiment, a diagram illustrating a case where the magnetomotive force phase difference is 40° with 40° phase-difference energization. FIG. 8 shows, as an example of a "magnetomotive force phase difference of 40°," the combined magnetomotive force of the U-phase partial winding U3+ of the third stator winding 323 and the U-phase partial winding U4+ of the fourth stator winding 324 in the third coil body Uc, which is wound around the tooth T14 and formed in the fourth embodiment.

The phase of the combined U-phase current Us+ is 20°, and the current amplitude is 1.88 times the basic current amplitude I that flows through the U3+/U4+ partial windings of the third and fourth stator windings 323 and 324. The phase difference between the magnetomotive force of the first coil body Ua formed by the partial winding U3+ and the magnetomotive force of the third coil body Uc is 20°. The phase difference between the magnetomotive force of the third coil body Uc and the magnetomotive force of the second coil body Ub formed by the partial winding U4+ is also 20°.

### Fifth Embodiment

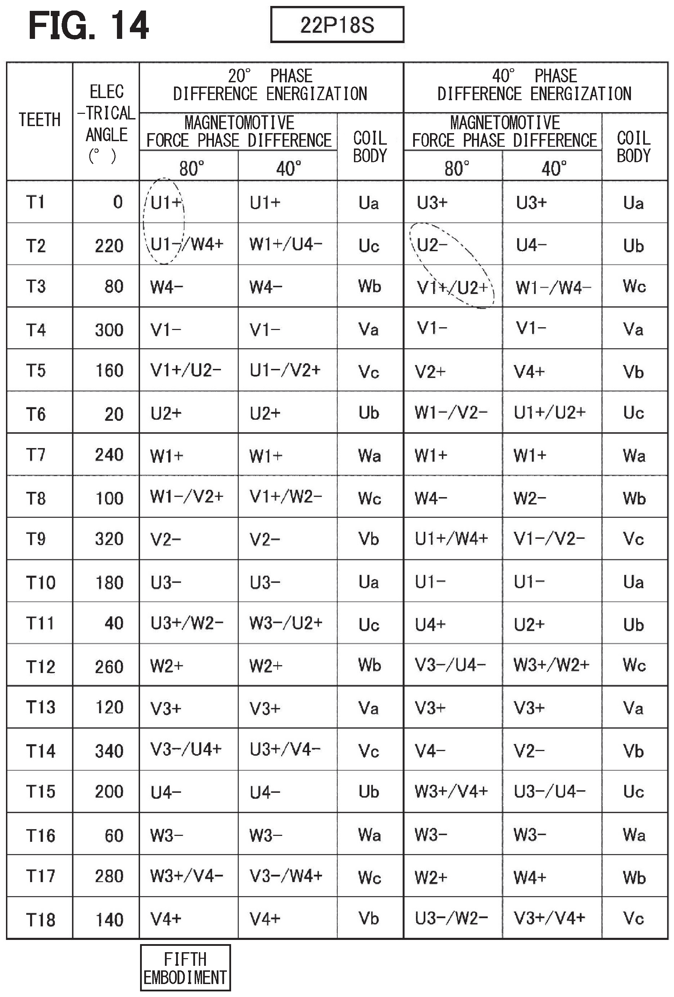

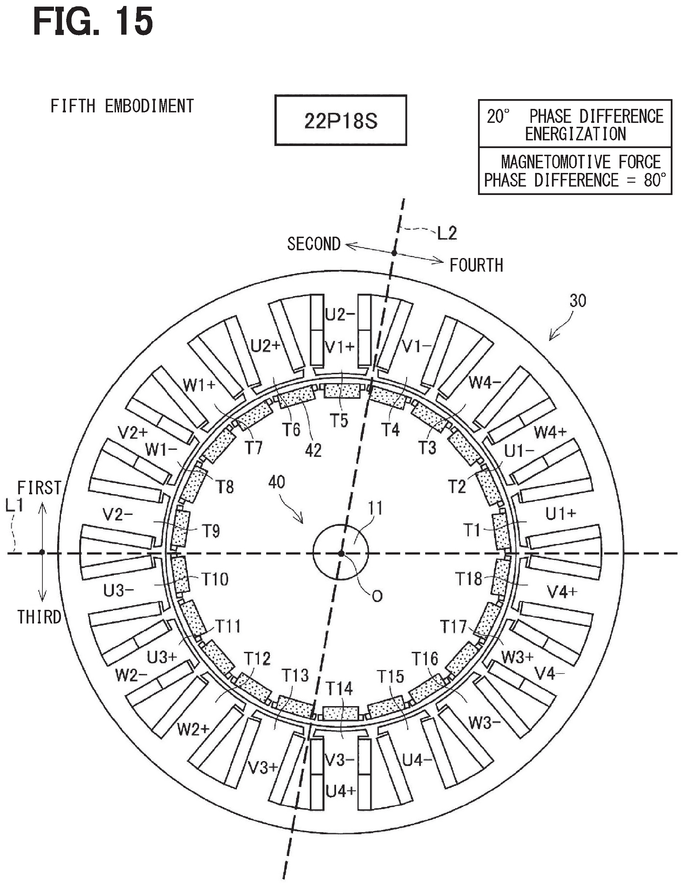

FIG. 14 shows a table of exemplary arrangements of the partial windings of the four-system stator windings 321 to 324 in a 22P18S motor. FIG. 15 shows, as a fifth embodiment, a diagram illustrating a case where the magnetomotive force phase difference is 80° with a 20° phase difference in energization.

### Sixth and Seventh Embodiments

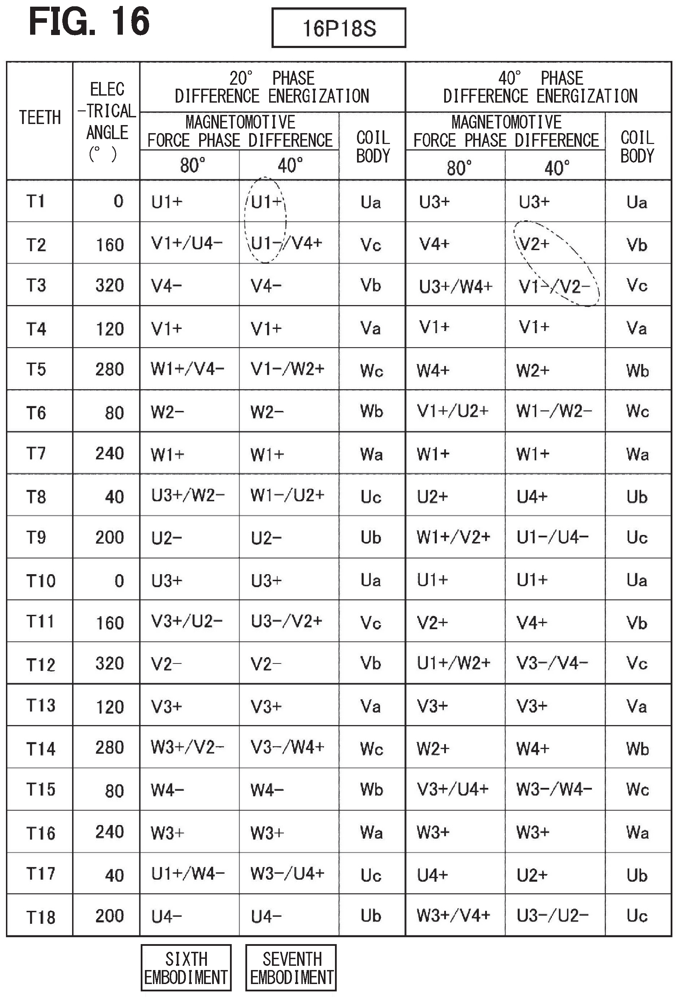

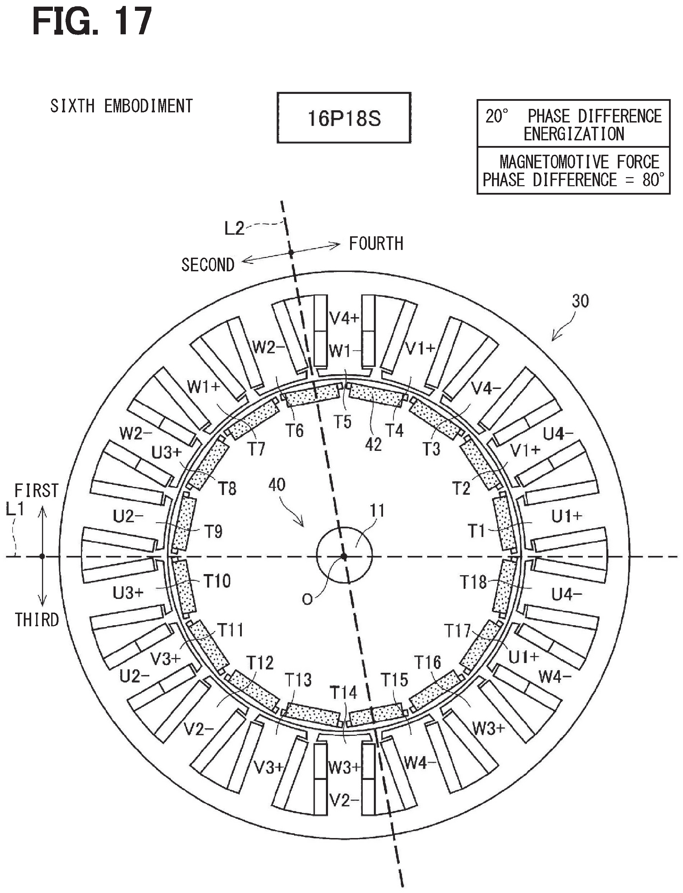

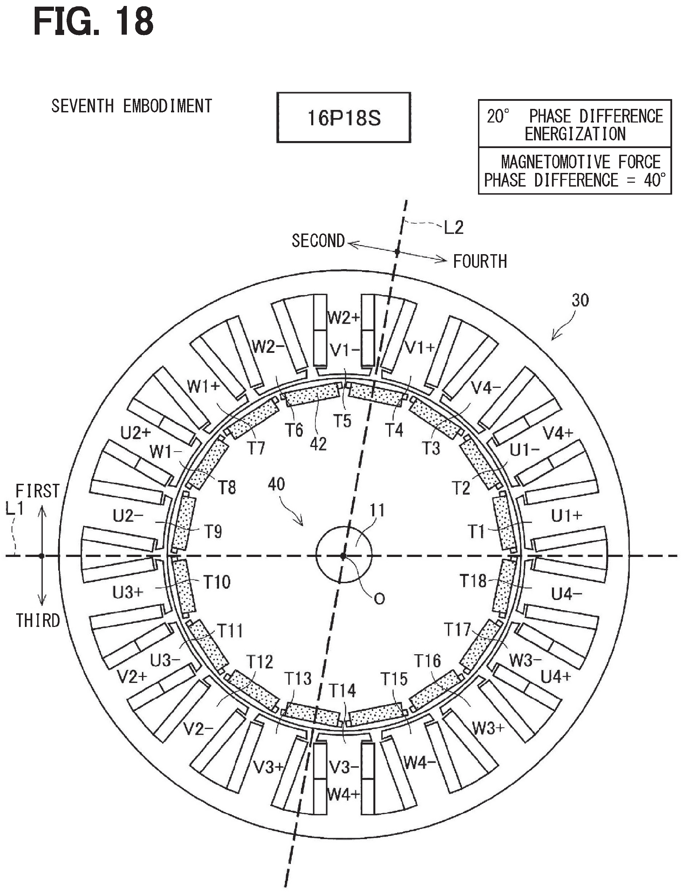

FIG. 16 shows a table of exemplary arrangements of the partial windings of the four-system stator windings 321 to 324 in a 16P18S motor. FIG. 17 shows, as a sixth embodiment, a diagram illustrating a case where the magnetomotive force phase difference is 80° with a 20° phase difference in energization. FIG. 18 also shows, as a seventh embodiment, a diagram illustrating the case where the magnetomotive force phase difference is 40° with a 20° phase difference in energization. As described above, in the configurations of 16P18S and 20P18S, when the magnetomotive force phase difference is 40°, the first tooth and the third tooth, as well as the second tooth and the third tooth-each of which is wound with stator windings of the same phase in the same system-are circumferentially adjacent to each other.

### Eighth Embodiment

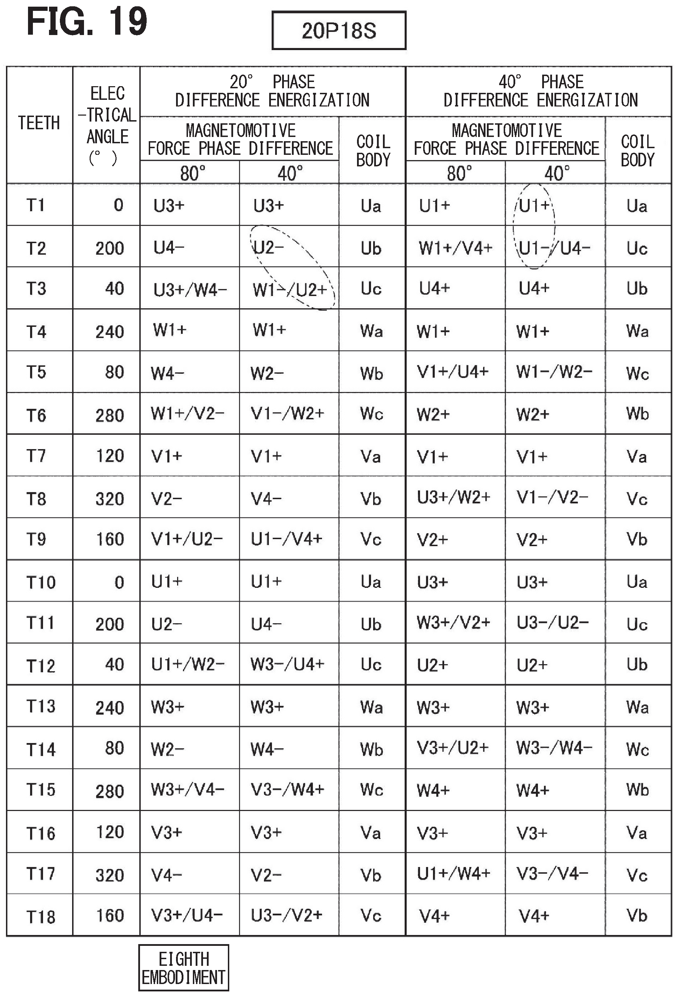

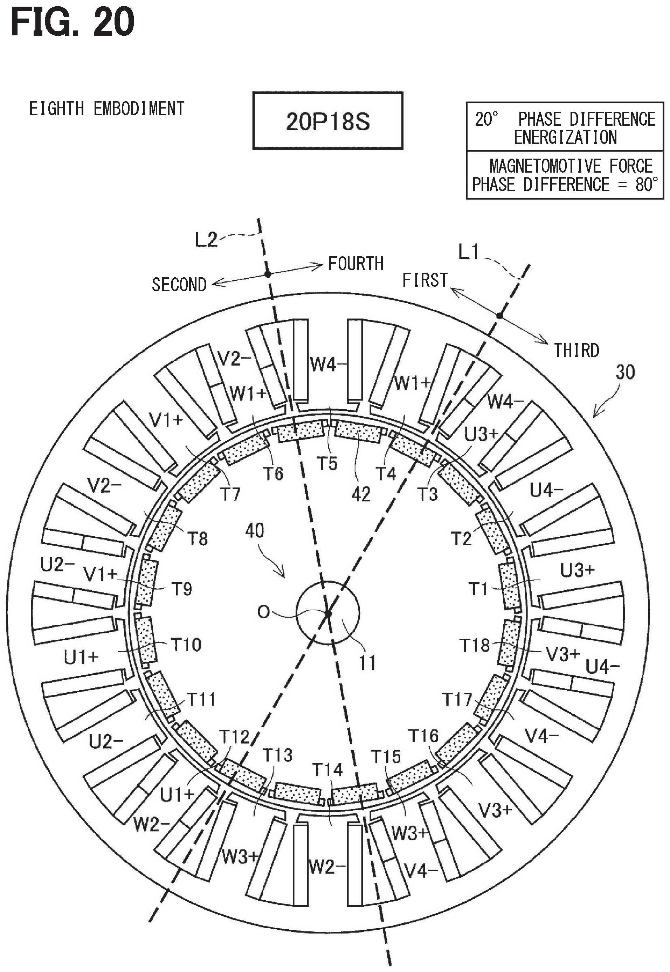

FIG. 19 shows a table of exemplary arrangements of the partial windings of the four-system stator windings 321 to 324 in a 20P18S motor. FIG. 20 shows, as an eighth embodiment, a diagram illustrating a case where the magnetomotive force phase difference is 80° with a 20° phase difference in energization.

### Ninth Embodiment

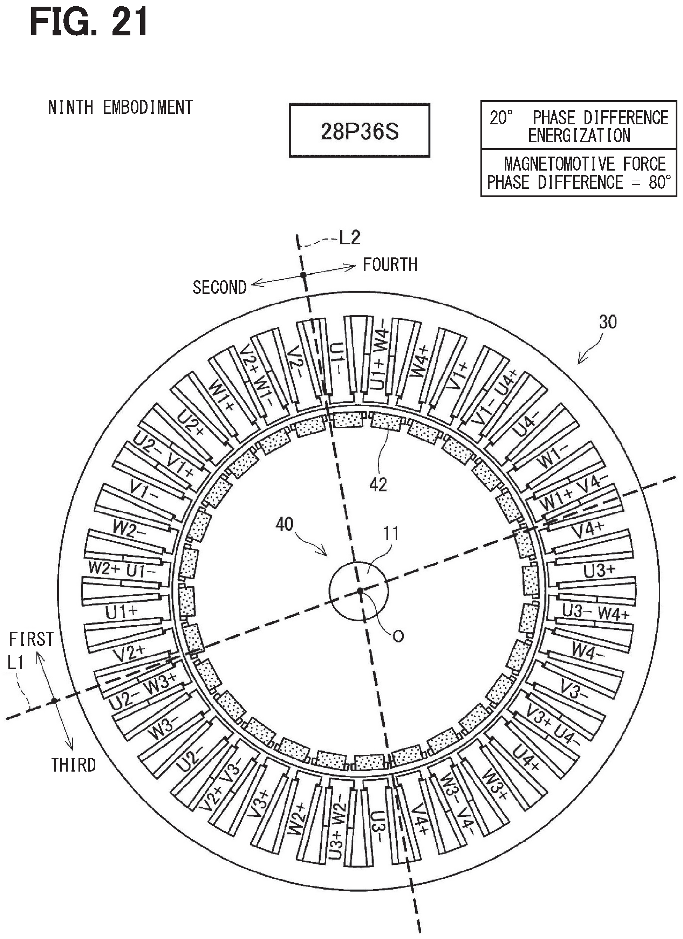

A 28P36S motor of a ninth embodiment is a configuration corresponding to "18 - 4" with "m = 2" in the general form, where the number of magnetic poles is (18 ± 4) × m (m is an integer of 1 or more), and the number of slots is 18 × m. FIG. 21 shows a diagram illustrating a case where the magnetomotive force phase difference is 80° with a 20° phase difference in energization. In FIG. 21, the reference numerals for the thirty-six teeth are omitted. In the ninth embodiment, similar effects to those of the above embodiments can be obtained, and application to an eight-system configuration is also possible.

Similarly, the configuration corresponding to "18 + 4" with "m = 2" in the general form, where the number of magnetic poles is (18 ± 4) × m (m is an integer of 1 or more) and the number of slots is 18 × m, is 44P36S. Also, in the general form where the number of magnetic poles is (18 ± 2) × n (n is an integer of 1 or more) and the number of slots is 18 × n, the configurations corresponding to "n = 2" are 32P36S and 40P36S. Furthermore, expansion is possible even in cases where "m ≥ 3" or "n ≥ 3."

### Other Embodiments

(a) The arrangement of the partial windings of the stator winding 32 wound around each tooth in each "number of magnetic poles - number of slots" motor is not limited to the above examples. The arrangement may also be such that the teeth T1, where the current phase is 0° electrical angle, are positioned in the opposite direction to the above examples. The first stator winding 321 and the third stator winding 323 may be completely swapped, and the second stator winding 322 and the fourth stator winding 324 may also be completely swapped.
(b) Alternative examples of the arrangement of the lead wires A1 to A4, B1 to B4, and C1 to C4 of the stator windings 321 to 324, different from that shown in FIG. 3, are illustrated in FIGS. 22 to 24. In each case, as in the arrangement example of FIG. 3, in the first lead wire group ABC13, the lead wires A1, B1, C1 and the lead wires A3, B3, C3 are arranged symmetrically with respect to each phase around the rotation shaft 11. In the second lead wire group ABC24, the lead wires A2, B2, C2 and the lead wires A4, B4, C4 are arranged symmetrically with respect to each phase around the rotation shaft 11. As in FIG. 3, the "left 2 - right 4" arrangement and the "left 4 - right 2" arrangement may be interchanged. As a result, in the angle sensor 56, which detects the rotational angle of the rotor 40 based on changes in the magnetic field of the sensor magnet 12, errors due to disturbance magnetic flux can be minimized.

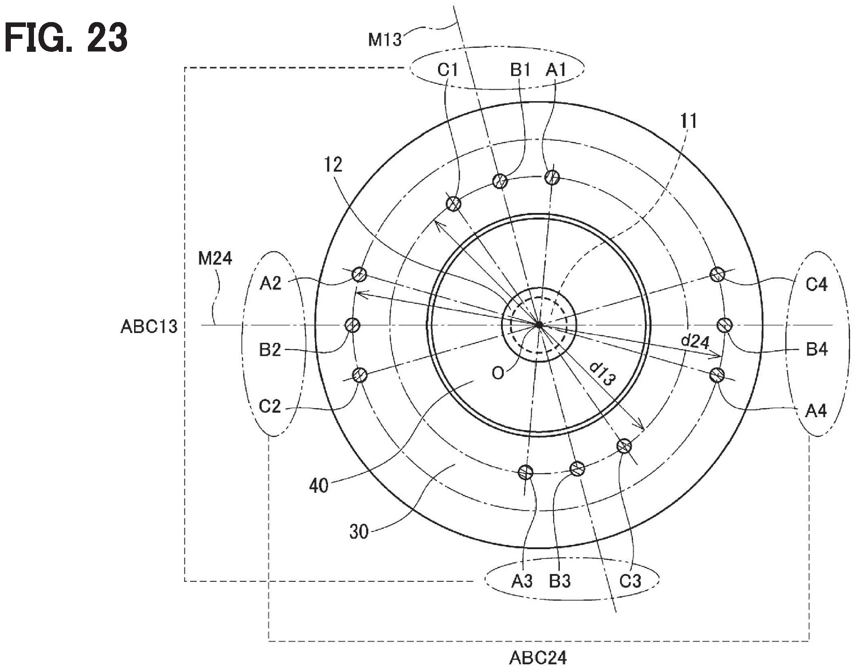

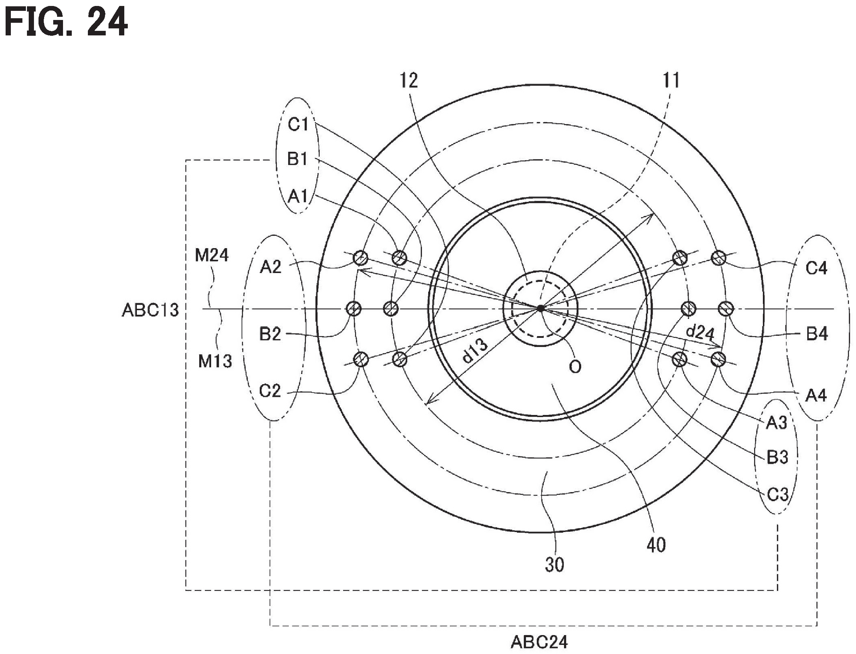

In the arrangement example shown in FIG. 22, the center line M13 of the first lead wire group ABC13 and the center line M24 of the second lead wire group ABC24 are not orthogonal, but intersect at an angle of less than 90° (approximately 75° in the illustrated example). The opposing distances d13 and d24 between the two lead wire groups ABC13 and ABC24 are equal. In the arrangement example shown in FIG. 23, compared to FIG. 22, the opposing distances d13 and d24 between the two lead wire groups ABC13 and ABC24 are different. In other words, the first lead wire group ABC13 and the second lead wire group ABC24 are arranged on concentric circles with different diameters. In the arrangement example shown in FIG. 24, an intersection angle between the center lines M13 and M24 of the two lead wire groups ABC13 and ABC24 is 0°. In other words, the first lead wire group ABC13 and the second lead wire group ABC24 are arranged side by side within a region of predetermined width.

The present disclosure should not be limited to the embodiment described above. Various other embodiments may be implemented without departing from the scope of the present disclosure.

### Disclosure of Technical Idea

This specification discloses a plurality of technical ideas described in the following enumerated items. Some of the items may be described in a multiple dependent form, in which a preceding item is alternatively referenced in subsequent items. Furthermore, some of the items may be described in a multiple dependent form that refers to another item in a multiple dependent form. These items described in multiple dependent form define a plurality of technical ideas.

### Technical Idea 1

A rotary electric machine comprising:
a rotor (40) having magnetic poles (42) with alternating polarities in a circumferential direction, the rotor rotating integrally with a rotation shaft; and
a stator (30) having a stator core (31) having teeth (T1 to T18) provided at predetermined intervals in the circumferential direction and three-phase stator windings (32) wound around the teeth, wherein
the stator windings includes:
   a first stator winding (321) to which a three-phase current is supplied from a first inverter (51);
   a second stator winding (322) to which a three-phase current is supplied from a second inverter (52);
a third stator winding (323) to which a three-phase current is supplied from a third inverter (53); and
a fourth stator winding (324) to which a three-phase current is supplied from a fourth inverter (54), the three-phase current supplied from the first inverter and the three-phase current supplied from the third inverter are energized with the same current amplitude and the same phase,
the three-phase current supplied from the second inverter and the three-phase current supplied from the fourth inverter are energized with the same current amplitude and the same phase,
the three-phase currents supplied from the first and third inverters and the three-phase currents supplied from the second and fourth inverters have a predetermined current phase difference therebetween, the rotary electric machine further comprising:
   a first coil body (Ua) of a U-phase, formed by winding the first stator winding or the third stator winding of the U-phase around a first tooth;
   a first coil body (Va) of a V-phase, formed by winding the first stator winding or the third stator winding of the V-phase around the first tooth;
   a first coil body (Wa) of a W-phase, formed by winding the first stator winding or the third stator winding of the W-phase around the first tooth;
   a second coil body (Ub) of the U-phase, formed by winding the second stator winding or the fourth stator winding of the U-phase around a second tooth;
   a second coil body (Vb) of the V-phase, formed by winding the second stator winding or the fourth stator winding of the V-phase around the second tooth;
   a second coil body (Wb) of the W-phase, formed by winding the second stator winding or the fourth stator winding of the W-phase around the second tooth;
   a third coil body (Uc) of the U-phase, formed by winding the first stator winding or the third stator winding of any one phase and the second stator winding or the fourth stator winding of any one phase around a third tooth;
   a third coil body (Vc) of the V-phase, formed by winding the first stator winding or the third stator winding of any one phase and the second stator winding or the fourth stator winding of any one phase around the third tooth; and
   a third coil body (Wc) of the W-phase, formed by winding the first stator winding or the third stator winding of any one phase and the second stator winding or the fourth stator winding of any one phase around the third tooth, wherein
a combined phase difference between a magnetomotive force generated by a partial winding of the first stator winding or the third stator winding wound around the third tooth and a magnetomotive force generated by a partial winding of the second stator winding or the fourth stator winding wound around the third tooth, or a combined phase difference between a current flowing through a partial winding of the first stator winding or the third stator winding wound around the third tooth and a current flowing through a partial winding of the second stator winding or the fourth stator winding wound around the third tooth, is set such that either of following conditions is satisfied:
   (a) each phase difference between the magnetomotive force of each third coil body (Uc, Vc, Wc) and the magnetomotive force of each first coil body (Ua, Va, Wa), and each phase difference between the magnetomotive force of each second coil body (Ub, Vb, Wb) and the magnetomotive force of each third coil body (Uc, Vc, Wc), is set within a predetermined phase range including 20 electrical degrees;
      or
   (b) each phase difference between the magnetomotive force of each second coil body (Ub, Vb, Wb) and the magnetomotive force of each first coil body (Ua, Va, Wa), and each phase difference between the magnetomotive force of each third coil body (Uc, Vc, Wc) and the magnetomotive force of each second coil body (Ub, Vb, Wb), is set within a predetermined phase range including 20 electrical degrees.

### Technical Idea 2

The rotary electric machine according to technical idea 1, wherein
a current phase difference between the three-phase currents supplied from the first and third inverters and the three-phase currents supplied from the second and fourth inverters is set within a range of 15 to 25 electrical degrees or 35 to 45 electrical degrees.

### Technical Idea 3

The rotary electric machine according to technical idea 1 or 2, wherein
a number of slots between the teeth is 18 times n.

### Technical Idea 4

The rotary electric machine according to technical idea 3, wherein
the number of turns of each winding is set.

### Technical Idea 5

The rotary electric machine according to technical idea 1 or 2, wherein
the number of magnetic poles of the rotor is (18±2)×n (where n is an integer of 1 or more), and a number of slots between the teeth is 18×n.

### Technical Idea 6

The rotary electric machine according to technical idea 5, wherein
a ratio Nab/Nc is set to satisfy 1.8 ≤ Nab/Nc ≤ 2.0

### Technical Idea 7

The rotary electric machine according to any one of technical ideas 1 to 6, wherein
the second tooth and the third tooth, around which the fourth stator winding of the same phase is wound, are adjacent in the circumferential direction.

### Technical Idea 8

The rotary electric machine according to any one of technical ideas 1 to 7, wherein
all the second teeth and third teeth around which the second stator winding of each phase is wound and all the second teeth and third teeth around which the fourth stator winding of each phase is wound are arranged in regions on opposite sides of a second boundary line (L2) passing through the rotation shaft.

### Technical Idea 9

The rotary electric machine according to any one of technical ideas 1 to 8, wherein
lead wires (A2, B2, C2) of the second stator winding connected to the second inverter and lead wires (A4, B4, C4) of the fourth stator winding connected to the fourth inverter are arranged so that each phase is symmetrical about the rotation shaft.

The present disclosure has been made in accordance with the embodiments. However, the present disclosure is not limited to such embodiments and configurations. The present disclosure also encompasses various modifications and variations within the scope of equivalents. Furthermore, various combination and formation, and other combination and formation including one, more than one or less than one element may be made in the present disclosure.

## Claims

1. A rotary electric machine comprising:
a rotor (40) having magnetic poles (42) with alternating polarities in a circumferential direction, the rotor rotating integrally with a rotation shaft; and
a stator (30) having a stator core (31) having teeth (T1 to T18) provided at predetermined intervals in the circumferential direction and three-phase stator windings (32) wound around the teeth, wherein
the stator windings includes:
a first stator winding (321) to which a three-phase current is supplied from a first inverter (51);
a second stator winding (322) to which a three-phase current is supplied from a second inverter (52);
a third stator winding (323) to which a three-phase current is supplied from a third inverter (53); and
a fourth stator winding (324) to which a three-phase current is supplied from a fourth inverter (54),
the three-phase current supplied from the first inverter and the three-phase current supplied from the third inverter are energized with the same current amplitude and the same phase,
the three-phase current supplied from the second inverter and the three-phase current supplied from the fourth inverter are energized with the same current amplitude and the same phase,
the three-phase currents supplied from the first and third inverters and the three-phase currents supplied from the second and fourth inverters have a predetermined current phase difference therebetween, the rotary electric machine further comprising:
a first coil body (Ua) of a U-phase, formed by winding the first stator winding or the third stator winding of the U-phase around a first tooth;
a first coil body (Va) of a V-phase, formed by winding the first stator winding or the third stator winding of the V-phase around the first tooth;
a first coil body (Wa) of a W-phase, formed by winding the first stator winding or the third stator winding of the W-phase around the first tooth;
a second coil body (Ub) of the U-phase, formed by winding the second stator winding or the fourth stator winding of the U-phase around a second tooth;
a second coil body (Vb) of the V-phase, formed by winding the second stator winding or the fourth stator winding of the V-phase around the second tooth;
a second coil body (Wb) of the W-phase, formed by winding the second stator winding or the fourth stator winding of the W-phase around the second tooth;
a third coil body (Uc) of the U-phase, formed by winding the first stator winding or the third stator winding of any one phase and the second stator winding or the fourth stator winding of any one phase around a third tooth;
a third coil body (Vc) of the V-phase, formed by winding the first stator winding or the third stator winding of any one phase and the second stator winding or the fourth stator winding of any one phase around the third tooth; and
a third coil body (Wc) of the W-phase, formed by winding the first stator winding or the third stator winding of any one phase and the second stator winding or the fourth stator winding of any one phase around the third tooth, wherein
a combined phase difference between a magnetomotive force generated by a partial winding of the first stator winding or the third stator winding wound around the third tooth and a magnetomotive force generated by a partial winding of the second stator winding or the fourth stator winding wound around the third tooth, or a combined phase difference between a current flowing through a partial winding of the first stator winding or the third stator winding wound around the third tooth and a current flowing through a partial winding of the second stator winding or the fourth stator winding wound around the third tooth, is set such that either of following conditions is satisfied:
(a) each phase difference between the magnetomotive force of each third coil body (Uc, Vc, Wc) and the magnetomotive force of each first coil body (Ua, Va, Wa), and each phase difference between the magnetomotive force of each second coil body (Ub, Vb, Wb) and the magnetomotive force of each third coil body (Uc, Vc, Wc), is set within a predetermined phase range including 20 electrical degrees;
or
(b) each phase difference between the magnetomotive force of each second coil body (Ub, Vb, Wb) and the magnetomotive force of each first coil body (Ua, Va, Wa), and each phase difference between the magnetomotive force of each third coil body (Uc, Vc, Wc) and the magnetomotive force of each second coil body (Ub, Vb, Wb), is set within a predetermined phase range including 20 electrical degrees.

2. The rotary electric machine according to claim 1, wherein
a current phase difference between the three-phase currents supplied from the first and third inverters and the three-phase currents supplied from the second and fourth inverters is set within a range of 15 to 25 electrical degrees or 35 to 45 electrical degrees.

3. The rotary electric machine according to claim 1, wherein
the combined phase difference is set within a range of 72 to 88 electrical degrees, and
a number of magnetic poles of the rotor is (18±4) times m (where m is an integer of 1 or more) and a number of slots between the teeth is 18 times m, or
a number of magnetic poles of the rotor is (18±2) times n (where n is an integer of 1 or more) and a number of slots between the teeth is 18 times n.

4. The rotary electric machine according to claim 3, wherein
a number of turns of the first stator winding or the third stator winding wound around the first tooth and a number of turns of the second stator winding or the fourth stator winding wound around the second tooth are each defined as Nab,
a number of turns of the first stator winding or the third stator winding wound around the third tooth and a number of turns of the second stator winding or the fourth stator winding wound around the third tooth are each defined as Nc, and
a ratio Nab/Nc is set to satisfy 1.4 ≤ Nab/Nc ≤ 1.6.

5. The rotary electric machine according to claim 1, wherein
the combined phase difference is set within a range of 32 to 48 electrical degrees, and
a number of magnetic poles of the rotor is (18±4) times m (where m is an integer of 1 or more) and a number of slots between the teeth is 18 times m, or
a number of magnetic poles of the rotor is (18±2) times n (where n is an integer of 1 or more) and a number of slots between the teeth is 18 times n.

6. The rotary electric machine according to claim 5, wherein
a number of turns of the first stator winding or the third stator winding wound around the first tooth and a number of turns of the second stator winding or the fourth stator winding wound around the second tooth are each defined as Nab,
a number of turns of the first stator winding or the third stator winding wound around the third tooth and a number of turns of the second stator winding or the fourth stator winding wound around the third tooth are each defined as Nc, and
a ratio Nab/Nc is set to satisfy 1.8 ≤ Nab/Nc ≤ 2.0.

7. The rotary electric machine according to claim 1, wherein
the first tooth and the third tooth, around which the first stator winding of the same phase is wound, are adjacent in the circumferential direction,
the second tooth and the third tooth, around which the second stator winding of the same phase is wound, are adjacent in the circumferential direction,
the first tooth and the third tooth, around which the third stator winding of the same phase is wound, are adjacent in the circumferential direction, and
the second tooth and the third tooth, around which the fourth stator winding of the same phase is wound, are adjacent in the circumferential direction.

8. The rotary electric machine according to claim 1, wherein
in a projection view in a direction of the rotation shaft,
all the first teeth and third teeth around which the first stator winding of each phase is wound and all the first teeth and third teeth around which the third stator winding of each phase is wound are arranged in regions on opposite sides of a first boundary line (L1) passing through the rotation shaft, and
all the second teeth and third teeth around which the second stator winding of each phase is wound and all the second teeth and third teeth around which the fourth stator winding of each phase is wound are arranged in regions on opposite sides of a second boundary line (L2) passing through the rotation shaft.

9. The rotary electric machine according to any one of claims 1 to 8, further comprising:
an angle sensor (56) configured to detect a rotation angle of the rotor based on a change in a magnetic field of a sensor magnet (12) fixed to an end portion of the rotation shaft, wherein
lead wires (A1, B1, C1) of the first stator winding connected to the first inverter and lead wires (A3, B3, C3) of the third stator winding connected to the third inverter are arranged so that each phase is symmetrical about the rotation shaft, and
lead wires (A2, B2, C2) of the second stator winding connected to the second inverter and lead wires (A4, B4, C4) of the fourth stator winding connected to the fourth inverter are arranged so that each phase is symmetrical about the rotation shaft.
